# EUROPÄISCHE PATENTSCHRIFT

(11) **EP 2 794 473 B1**
(45) Veröffentlichungstag und Bekanntmachung des Hinweises auf die Patenterteilung: **02.08.2017**
(21) Anmeldenummer: 12813010.1
(22) Anmeldetag: 21.12.2012
(51) Int. Cl.: C01B 25/37, C01B 25/38, C01B 25/45, C05B 7/00, C05B 9/00, C05B 17/00, C05B 17/02, C05D 9/02, A23K 20/105, A23K 20/22, A23K 20/24, A23K 20/26, A23K 20/20, A23L 33/16, A23L 33/165

(54) **NÄHRSTOFFZUSAMMENSETZUNG FÜR BIOLOGISCHE SYSTEME**
NUTRIENT COMPOSITION FOR BIOLOGICAL SYSTEMS
COMPOSITION DE SUBSTANCES NUTRITIVES POUR DES SYSTÈMES BIOLOGIQUES

(30) Priorität: 21.12.2011 DE 102011056815
(43) Veröffentlichungstag der Anmeldung: 29.10.2014
(73) Patentinhaber: Chemische Fabrik Budenheim KG, 55257 Budenheim (DE)
(72) Erfinder: WISSING, Albertus, 65835 Liederbach am Taunus (DE); BÜHLER, Gunnar, 56645 Nickenich (DE); GRAF, Christian, 55127 Mainz (DE); SCHWARZ, Kilian, 55129 Mainz (DE); RAPPHAHN, Michael, 65760 Eschborn (DE)
(74) Vertreter: WSL Patentanwälte Partnerschaft mbB
(86) Internationale Anmeldenummer: PCT/EP2012/076734
(87) Internationale Veröffentlichungsnummer: WO 2013/093042

(56) Entgegenhaltungen:
- WO-A2-2009/030796
- DE-A1-102009 001 204
- US-B1- 6 350 474
- DEGTYARENKO L N ET AL: "Synthesis of manganese cobalt phosphate dihydrates", RUSSIAN JOURNAL OF INORGANIC CHEMISTRY, CHEMICAL SOCIETY, LONDON, GB, Bd. 42, Nr. 1, 1. Januar 1997 (1997-01-01) , Seiten 29-31, XP008160642, ISSN: 0036-0236

## Beschreibung

### Gegenstand der Erfindung

Die Erfindung betrifft eine Nährstoffzusammensetzung für biologische Systeme, wie Menschen, Tiere, Pflanzen und Mikroorganismen.

### Hintergrund der Erfindung

Biologische Systeme, wie Menschen, Tiere, Pflanzen und Mikroorganismen, benötigen anorganische Elemente (Spurenelemente, Mengenelemente) und Mineralien für physiologische Prozesse und für die Synthese aktiver Substanzen. Die solchen biologischen Systemen zur Verfügung stehenden Nährstoffquellen stellen notwendige Elemente und Mineralien in sehr unterschiedlichen Mengen und chemischen Ausprägungen bereit. Daher kann es erforderlich sein, biologischen Systemen zusätzliche Nährstoffe mit anorganischen Elementen und Mineralien in geeigneten Mengen und in verwertbaren Formen zur Verfügung zu stellen.

Nach verschiedenen Studien werden mehr als 30 Spurenelemente als essentiell für lebende Prozesse angesehen. Die Spurenelementen umfassen zu einem großen Teil Metalle, wie z. B. Eisen, Kupfer, Mangan und Zink, aber auch einige Nichtmetalle, wie z. B. lod, Selen, Brom und Fluor.

Fehlende Spurenelemente in der Ernährung von Menschen, Tieren, Pflanzen und Mikroorganismen können zu Mangelerscheinungen, toxischen Wirkungen oder vermindertem Ertrag führen, beispielsweise in mikrobiellen Prozessen wie der Biofermentation oder in der Pflanzen- und Tierproduktion.

Wesentliche Faktoren für die Verfügbarkeit von Nährstoffen sind neben der Aufnahmefähigkeit eines biologischen Systems unter anderem die dem biologischen System angebotenen Mengen bzw. Konzentrationen und die Formen, in denen die Nährstoffe dem biologischen System bereitgestellt werden. Zu den letztgenannten Formen der Nährstoffe zählen nicht nur die Verbindungen selbst, in denen die Nährstoffe vorliegen, sondern häufig auch die Umgebungsbedingungen, unter denen die Nährstoffe dem biologischen System angeboten werden, beispielsweise der pH-Wert.

Die Pflanzenverfügbarkeit von Nährstoffen im Boden wird durch verschiedene Faktoren beeinflusst. So sind zum Beispiel die Spurenelemente B, Cu und Zn bei einem pH-Wert im Boden zwischen 5 und 7 optimal pflanzenverfügbar, wohingegen Fe und Mn bei einem pH-Wert unter 6, Ca und Mg jedoch bei einem pH-Wert über 6,5 besser verfügbar sind. Die Pflanzenverfügbarkeit der Übergangsmetalle in Böden kann signifikant durch die Bildung verschiedener Komplexe begrenzt sein. Oxide und Oxyhydroxide von Fe, Zn, Cu und Mn spielen eine wichtige Rolle bei der Löslichkeit dieser Elemente im Boden, wobei das vorherrschende Redoxpotential des jeweiligen Bodengefüges eine entscheidende Rolle spielt.

Es gibt mehrere Beispiele der Biochemie, in denen metallische Spurenelemente in spezifischen Funktionen und insbesondere einzigartigen Metallkombinationen enorme Massen in der Biosphäre transformieren. Beispielsweise spielt eine Kombination von Mangan und Magnesium sowie ihr stöchiometrisches Verhältnis eine wichtige Rolle bei photosynthetischen Prozessen. Die lonenverhältnisse von Molybdän und Magnesium bzw. Kupfer und Magnesium spielen eine wichtige Rolle bei der Substratoxidation und anschließenden Energiespeicherung in Verdauungsprozessen.

Obwohl Eisen eines der am häufigsten im Boden vorkommenden Elemente ist, sind die pflanzenverfügbaren Mengen in vielen Böden begrenzt. Eisen aus den meisten primären Bodenmineralien liegt in der zweiwertigen Fe(II)-Form vor, wird jedoch durch Verwitterungsprozesse unter aeroben Bedingungen oxidiert und als Fe(III)-Oxid festgelegt. Obwohl Fe(III) in wesentlich größeren Mengen in Böden vorhanden ist, hat Fe(II) die größere pflanzenphysiologische Bedeutung, da es die weitaus bevorzugtere Aufnahmeform ist. Auch Fe(II) aus konventionellen Düngern oxidiert schnell und fällt in der Bodenmatrix oft ungenutzt aus. Bekannte Dünger enthalten Eisen in der Form von Eisensulfat, Eisenammoniumsulfat, Eisenammoniumcitrat, Eisengluconat, Eisenligninsulphonat oder auch in chelatisierter Form. Eisensulfat hat beispielsweise einen Eisengehalt von etwa 20%, ist als Dünger relativ kostengünstig und kann als Bodenapplikation oder als Blattapplikation ausgebracht werden. Bodenappliziertes Eisensulfat ist jedoch wegen schnell eintretender Fällungsreaktionen zu Fe(III), insbesondere bei Boden-pH-Werten über 7, häufig ineffektiv.

Die Blattapplikation von Spurenelementen kann durch oberflächenaktive Mittel, welche auf die Verteilung und Aufnahme der Nährstoffe wirken, verbessert werden. Als oberflächenaktive Mittel werden Pflanzenöle, Rapsmethylester, Eiweißderivate, ionische und nichtionische Netzmittel, Organosilikone, Polymere, Wachse etc. eingesetzt. Sie wirken als Netzmittel für eine verbesserte Benetzung der Blattoberfläche, als Penetrationsmittel zur Erleichterung der Aufnahme der Nährstoffe in die Pflanze oder als Haftmittel zur Verbesserung der Haftung der Nährstoffe auf der Blattoberfläche.

Eisensulfat und Eisenchelate mit DTPA oder EDTA werden über Blattapplikation zur Behebung oder Verhinderung von Chlorosen eingesetzt, jedoch mit unterschiedlichem Resultat. Während Eisensulfat die kostengünstigere Verbindung ist, zeigen die teureren Eisenchelate häufig bessere Wirkung, weil das Eisen in stabilisierter Form vorliegt und zudem vom Blatt auch direkt aufgenommen werden kann. Versuche, die Aufnahme von Eisen über eine Blattapplikation zu verbessern, umfassen die Formulierung des Eisensulfats zusammen mit Citrat oder die direkte Anwendung von Eisenlignosulphonaten und Fe(III)-Salzen unter sauren Formulierungsbedingungen.

Bodenapplizierte Eisenchelate sind wasserlöslich und werden bei intensiver Bewässerung oder während der vegetationsarmen Zeit im Herbst und Winter leicht aus der Wurzelzone der Pflanzen ausgewaschen. Ein möglicherweise unterschätztes Problem einiger synthetischer Chelate ist das potentielle Bindungsvermögen von Schwermetallen mit anschließender erhöhter Auswaschung. Einige Eisenchelate wirken sich vermutlich negativ auf im Boden befindliche Mikroorganismen und Mykorrhizen aus.

Zur Verbesserung der Wirksamkeit weniger teurer Eisendüngerformen, wie beispielsweise Eisensulfat, wurden sogenannte Controlled-Release Fertilizer (CRF) mit definierter langsamer Nährstofffreisetzung vorgeschlagen. Andere Ansätze betreffen eine Bandausbringung von Eisensulfat mit hydrophilen Polyacrylamidgelen, mit Schwefel umhüllte Eisendüngergranulate oder die Immobilisierung von Eisenchelaten in Sepharosegel. Verschiedene natürlich vorkommende kristalline **Eisenverbindungen,** wie Vivianit (Fe₃(PO₄)₂ · 8H₂O) und Pyrit (FeS₂), zeigen eine höhere Effektivität als FeSO₄, sind aber weniger verfügbar und daher teurer.

Die Herstellung von synthetischem Vivianit wird als relativ günstig und einfach beschrieben, indem man Eisensulfat-Heptahydrat und Mono- oder Di-Ammoniumphosphat gleichzeitig direkt vor Ort beim Endanwender in Wasser löst. Das Produkt ist eine zunächst weiße Suspension, die aber schnell eine grünlich-blaue Farbe annimmt, was charakteristisch für teilweise oxidiertes Vivianit ist. Um zu verhindern, dass sich die Vivianitpartikel, die eine Größe von etwa 2-10 µm aufweisen, am Boden des Herstellungsbehälters absetzen, ist die Suspension kontinuierlich zu rühren und möglichst rasch einzusetzen.

Dem Fachmann sind viele Hinweise auf synergistische Effekte unterschiedlicher Nährelemente auf Pflanzen, insbesondere bei der gleichzeitigen Applikation im nahen Bereich der Rhizosphäre, bekannt. Beispielsweise sollen Ammonium, Sulfat oder Kalium die Verfügbarkeit von Eisen in kalkhaltigen Böden signifikant durch die physiologische Versauerung der Rhizosphäre erhöhen.

Eine ausreichende Spurenelementversorgung der landwirtschaftlichen und gartenbaulichen Kulturen ist für die Ernährung von Mensch und Tier von entscheidender Bedeutung. Eisen- und Zinkkonzentrationen in pflanzlichen Nahrungsmitteln, wie Getreide und Reis, und deren Bioverfügbarkeit liegen im Fokus der Forschung. Es ist bekannt, dass sich die Spurenelementkonzentrationen insbesondere in Getreide signifikant unterscheiden und durch bekannte Maßnahmen erhöht werden können.

Nährstoffzusätze für Tiernahrung sollen die Qualität des Futters sowie die Gesundheit und Leistungsfähigkeit der Tiere verbessern. Landwirtschaftlich gehaltene Tiere decken den größten Teil ihres Bedarfs an Spurenelementen über die ihnen dargebotene pflanzliche Nahrung. Daher ist das Vorhandensein wichtiger Spurenelemente in vegetativen Pflanzenteilen und Pflanzensamen für die Tiernahrung von größter Bedeutung.

Wie in der Pflanzenernährung gibt es auch in der Tierernährung bekannte antagonistische Interaktionen zwischen Spurenelementen im Organismus. Eine der wohl am besten erforschten Interaktionen betrifft die antagonistische Beziehung der Spurenelemente Kupfer, Molybdän und Schwefel. Ein Überschuss an Schwefel, Molybdän und Eisen in der Nahrung soll die Aufnahme und Nutzung von Kupfer verschlechtern. Dies führt zu Mangelerscheinungen, sogar bei ausreichenden Kupferkonzentrationen in der Nahrung. Es besteht somit die Notwendigkeit, die Tiernahrung hinsichtlich der Konzentrationsverhältnisse der Spurennährstoffe abzustimmen.

Die Bereitstellung von Nährsubstanzen in geeigneter Zusammensetzung ist auch für die in industriellen mikrobiologischen (biotechnologischen) Prozessen eingesetzten Mikroorganismen von entscheidender Bedeutung, um die Produktivität des jeweiligen Systems zu optimieren.

Die Fermentation, d. h. der Abbaustoffwechsel organischer Substanz durch Mikroorganismen unter entweder aeroben oder anaeroben Bedingungen, liefert vielfältige Endprodukte. Dabei ist neben wesentlichen weiteren Prozessparametern, wie Temperatur, pH-Wert etc., die optimale Nährstoffzusammensetzung des Mediums von entscheidender Bedeutung für den Erfolg. Je nach Anwendung können zu den wichtigen Nährstoffen auch essentielle Spurenelemente wie Cu, Co, Fe, Mn, Mo oder Zn gehören.

### Aufgabe

Die Aufgabe der vorliegenden Erfindung bestand in der Bereitstellung einer gegenüber dem Stand der Technik verbesserten Nährstoffzusammensetzung für biologische Systeme, wie Menschen, Tiere, Pflanzen und Mikroorganismen.

### Beschreibung der Erfindung

Die Aufgabe der Erfindung wird gelöst durch eine Nährstoffzusammensetzung, welche wenigstens ein monometallisches oder gemischtmetallisches Phosphat vom Typ (M1 M2 M3...Mx)₃(PO₄)₂ · aH₂O mit 0 ≤ a ≤ 9 enthält, wobei (M1, M2, M3 ... Mx) das eine Metall des monometallischen oder die mehreren Metalle des gemischtmetallischen Phosphats repräsentieren und unter Na, K, Mg, Ca, Cr, Mo, W, Mn, Fe, Co, Ni, Cu, Zn und B ausgewählt sind mit der Maßgabe, dass wenigstens eines der Metalle in dem Phosphat unter Mn, Fe, Co und Ni ausgewählt ist, wobei das wenigstens eine Phosphat herstellbar oder hergestellt ist, indem man
a) eine wässrige Lösung (I) herstellt, welche wenigstens eines oder mehrere der Metalle Mn, Fe, Co und/oder Ni als zweiwertige Kationen enthält, indem man oxidische Metall(II)-, Metall(III)- und/oder Metall(IV)-Verbindungen oder deren Gemische oder Verbindungen mit gemischten Oxidationsstufen, ausgewählt unter Hydroxiden, Oxiden, Oxidhydroxiden, Oxidhydraten, Carbonaten und Hydroxidcarbonaten, von wenigstens einem der Metalle Mn, Fe, Co und/oder Ni zusammen mit den elementaren Formen oder Legierungen von wenigstens einem der Metalle Mn, Fe, Co und/oder Ni in ein Phosphorsäure enthaltendes wässriges Medium einbringt und die oxidischen Metallverbindungen mit den elementaren Formen oder Legierungen der Metalle (in einer Redoxreaktion) zu den zweiwertigen Metallionen umsetzt,
b) gegebenenfalls enthaltene Feststoffe von der phosphorsauren wässrigen Lösung (I) abtrennt,
c) wenn das Phosphat ein gemischtmetallisches Phosphat ist und zusätzlich zu den in Stufe a) in die Lösung eingebrachten Metallen weitere unter (M1, M2, M3 ... Mx) ausgewählte Metalle enthält, der wässrigen Lösung (I) weiterhin wenigstens eine Verbindung von wenigstens einem der Metalle (M1, M2, M3 ... Mx) in der Form einer wässrigen Lösung oder als Feststoff in der Form eines Salzes zugibt, wobei die wenigstens eine Verbindung vorzugsweise unter Hydroxiden, Oxiden, Oxidhydroxiden, Oxidhydraten, Carbonaten, Hydroxidcarbonaten, Carboxylaten, Sulfaten, Chloriden oder Nitraten der Metalle ausgewählt ist,
d) eine aus einer wässrigen Phosphorsäurelösung durch Neutralisation mit einer wässrigen Alkalihydroxidlösung hergestellte oder eine aus einer wässrigen Lösung eines oder mehrerer Alkaliphosphate hergestellte Vorlagelösung (II) mit einem pH-Wert von 5 bis 8 bereitstellt,
e) die wässrige Lösung (I) zu der Vorlagelösung (II) zudosiert und gleichzeitig eine basische wässrige Alkalihydroxidlösung so zudosiert, dass der pH-Wert des erhaltenen Reaktionsgemisches im Bereich von 5 bis 8, vorzugsweise 6 bis 7, gehalten wird, wobei das Phosphat vom Typ (M1 M2 M3...Mx)₃(PO₄)2 · a H₂O ausgefällt wird,
f) das ausgefällte Phosphat von der Reaktionslösung abtrennt, wobei das in Verfahrensschritt f) ausgefällte Phosphat eine plättchenförmige Morphologie der Primärkristalle aufweist und wobei die Plättchendicke der Primärkristallite in dem Bereich von 30 bis 50 nm liegt. Ein monometallisches Phosphat im Sinne der vorliegenden Erfindung ist ein Phosphat vom Typ M₃(PO₄)₂ · a H₂O mit 0 ≤ a ≤ 9, wobei M ein unter Mn, Fe, Co und Ni ausgewähltes Metall ist. Im Falle eines monometallischen Phosphats repräsentiert die Formelschreibweise (M1 M2 M3...Mx) somit ein einziges Metall M.

Ein gemischtmetallisches Phosphat im Sinne der vorliegenden Erfindung ist ein Phosphat vom Typ (M1 M2 M3...Mx)₃(PO₄)₂ · a H₂O mit 0 ≤ a ≤ 9, wobei die Formelschreibweise (M1 M2 M3...Mx) zwei oder mehr verschiedene Metalle repräsentiert, von denen wenigstens eines unter Mn, Fe, Co und Ni ausgewählt ist. Das oder die übrigen Metalle können unter Na, K, Mg, Ca, Cr, Mo, W, Mn, Fe, Co, Ni, Cu, Zn und B ausgewählt sein, ausgenommen das oder die bereits unter Mn, Fe, Co und Ni ausgewählten Metalle.

Die bei der Herstellung einer erfindungsgemäßen Nährstoffzusammensetzung in die Lösung (I) eingebrachten Metalle Mn, Fe, Co und/oder Ni werden hierin auch als "Hauptmetalle" bezeichnet. Die weiterhin optional in die Lösung (I) eingebrachten Metalle, ausgewählt unter Na, K, Mg, Ca, Cr, Mo, W, Mn, Fe, Co, Ni, Cu, Zn und B, werden hierin auch als "Dotierungsmetalle" bezeichnet. Die Dotierungsmetalle können in der Form der zweiwertigen Metallionen in der Lösung vorliegen, sie können aber auch in der Form der dreiwertigen oder vierwertigen Metallionen in der Lösung vorliegen.
Die Herstellung des erfindungsgemäßen Produkts ist einfach und kostengünstig. Der besondere Vorteil liegt darin, dass die einer ersten Reaktionsstufe hergestellte wässrige phosphorsaure Lösung (I) lediglich die gewünschten Metallkationen und Phosphatanionen bzw. Phosphorsäure enthält und keine oder keine wesentlichen Mengen an Nicht-Phosphationen, wie Sulfaten, Nitraten oder Chloriden, die häufig unerwünscht sind. Werden Dotierungsmetalle in der Form von Sulfaten, Nitraten oder Chloriden eingebracht, was im Umfang der Erfindung liegt, so erfolgt dies üblicherweise in sehr geringen Mengen, die die Reinheit des Produkts nicht wesentlich beeinträchtigen. Das erfindungsgemäße Produkt zeichnet sich daher durch eine hohe Reinheit aus, wodurch es sich als Nährstoff alleine oder in komplexen Nährstoffmischungen bestens eignet. Die Erfindung stellt ein äußert flexibles Reaktionsprinzip zur Verfügung, mit dem sich eine Vielzahl von Phosphatsystemen der hierin beschriebenen Art darstellen lässt, beispielsweise (pseudo)binäre, (pseudo)ternäre und (pseudo)quaternäre Systeme.
Die hierin beschriebene Herstellung des monometallischen oder gemischtmetallischen Phosphats bietet die Möglichkeit, durch geeignete Wahl der Fällungsbedingungen, wie pH-Wert, Konzentrationen, Temperatur, etc., bestimmte Materialparameter, wie Kristallphase und Kationenverteilung, Morphologie, Kristallit- und Sekundärpartikelgröße sowie die chemische Reinheit der erhaltenen Produkte zu kontrollieren. Besonders erstrebenswert sind dabei Produkte mit feiner plättchenförmiger Morphologie, welche eine einheitliche Kristallphase und eine isotrope Verteilung der Kationen aufweisen. Die feine plättchenförmige Morphologie erlaubt eine feine Dispersion und bietet zudem die größtmögliche Oberfläche, um biologischen Systemen die Nährstoffe bereitzustellen.
In vielen technischen, aber auch biologischen Systemen hat die Produktmorphologie eine kritische Bedeutung für den Anwendungserfolg. Zur Verdeutlichung wurden bereits oben die Bedeutung und der Stand der Technik bezüglich der Herstellung von einem synthetischen Vivianit für den Einsatz als Düngemittel dargestellt. Die verwendeten Verfahren nach dem Stand der Technik zur Herstellung eines synthetischen Fe(II)-Phosphats Fe₃(PO₄)₂.8H₂O (analog zu dem mineralischen Vivianit) führen zu Produkteigenschaften die eine relativ grobe Partikelmorphologie aufweisen. Dem gegenüber lässt sich erfindungsgemäß eine sehr feine plättchenförmige Morphologie erreichen, die zu einer verbesserten Verfügbarkeit insbesondere der primär enthaltenen Fe²⁺ Ionen führt. Das erfindungsgemäße Produkt bietet somit verbesserte Eigenschaften gegenüber dem Stand der Technik zur Vermeidung und Behebung von Nährstoffmangelerscheinungen.

Bei der Herstellung des erfindungsgemäßen Produkts werden in einer ersten Reaktionsstufe die oxidischen Metall(II)-, Metall(III)- und/oder Metall(IV)-Verbindungen mit elementarem Metall oder Legierungen in phosphorsaurem wässrigem Medium in einer Redoxreaktion zu den zweiwertigen Metallionen umgesetzt. Der Verlauf der beschriebenen Redoxreaktion zwischen den elementaren Metallen und den oxidischen Komponenten hängt von ihren jeweiligen spezifischen Oberflächen ab, da der Elektronenübertrag an der Grenzfläche stattfindet. Als konkurrierende Nebenreaktion zum Übertrag von Elektronen von den elementaren Metallformen auf die oxidischen Metallformen muss die Bildung von Wasserstoffgas berücksichtigt werden. Dabei kommt es zum Elektronenübertrag von den elementaren Metallformen auf Protonen unter Bildung von Radikalen, welche durch Radikalkombination Wasserstoffgas bilden. Die Partikelgrößen der eingesetzten elementaren und oxidischen Metallformen sollten daher aufeinander abgestimmt werden, um die Nebenreaktion zurückzudrängen und den größtmöglichen Nutzen aus der Auflösung der kostengünstigen oxidischen Metallform zu ziehen. Allgemein gilt, je feiner die elementare Metallform ist, desto eher wird die Nebenreaktion begünstigt, wenn die oxische Form keine ausreichend hohe aktive Oberfläche bietet.
Je nach Zusammensetzung der Reaktionslösung können nicht umgesetzte Komponenten als feste Rückstände in der Lösung verbleiben. Sofern in der resultierenden Reaktionslösung noch Feststoffe enthalten sind, werden diese bei der Herstellung der Nährstoffzusammensetzung gemäß Variante A vorzugsweise von der phosphorsauren wässrigen Lösung abgetrennt. Die Abtrennung von Feststoffen kann nach allen geeigneten bekannten Methoden zur Trennung von Flüssigkeiten und Feststoffen durchgeführt werden, beispielsweise Filtration, Zentrifugation, Sedimentation etc.

Wenn das erfindungsgemäß herzustellende Produkt zusätzlich zu den in der ersten Reaktionsstufe (Redoxreaktion) in die Lösung (I) eingebrachten Metallen weitere unter (M1, M2, M3 ... Mx) ausgewählte Metalle enthalten soll, gibt man der wässrigen Lösung (I) nach der ersten Reaktionsstufe (Redoxreaktion) wenigstens eine Verbindung von wenigstens einem der Metalle (M1, M2, M3 ... Mx) in der Form einer wässrigen Lösung oder als Feststoff in der Form eines Salzes zu, wobei die wenigstens eine Verbindung vorzugsweise unter Hydroxiden, Oxiden, Oxidhydroxiden, Oxidhydraten, Carbonaten, Hydroxidcarbonaten, Carboxylaten, Sulfaten, Chloriden oder Nitraten der Metalle ausgewählt ist. Die Zugabe dieser Metalle erfolgt zweckmäßigerweise nachdem gegebenenfalls enthaltene Feststoffe von der phosphorsauren wässrigen Lösung (I) abgetrennt wurden. Alternativ kann die beschriebene Zugabe der Metalle auch unmittelbar nach der Herstellung der Lösung (I) in der ersten Reaktionsstufe (Redoxreaktion) und vor der Abtrennung von gegebenenfalls enthaltenen Feststoffen erfolgen. Die Abtrennung gegebenenfalls enthaltener Feststoffe erfolgt dann im Anschluss an die Zugabe der Dotierungsmetalle. Für bestimmte Anwendungen kann eine Abtrennung enthaltener Feststoffe nicht erforderlich sein. Die Abtrennung wird dann nicht durchgeführt. Ein solche Variante ist von der vorliegenden Erfindung mit umfasst.
Durch Hinzufügen von geeigneten Metallsalzen (Dotierungsmetallen) in der genannten Form lässt sich der gewünschte Metallgehalt bzw. das Verhältnis der Metalle zueinander im herzustellenden Produkt sehr genau einstellen. Dies gilt vor allem für Metalle, die in verhältnismäßig geringer Menge eingesetzt werden. Zweckmäßigerweise sollten Metallverbindungen eingebracht werden, die keine störenden Anionen in die Mischung einbringen, um ein höchstes Maß an Reinheit des Produktes zu gewährleisten. Solche Metallverbindungen sind insbesondere Hydroxide, Oxide, Oxidhydroxide, Oxidhydrate, Carbonate und Hydroxidcarbonate, die unter den vorherrschenden sauren Bedingungen unter Bildung von Wasser reagieren bzw. zerfallen. Falls notwendig, können dem Fachmann geläufige Puffer eingesetzt werden, um eine unerwünschte vorzeitige bzw. unkontrollierte Ausfällung zu verhindern. Carboxylate können ebenfalls geeignet sein, wenn die im Gemisch verbleibenden Anteile von organischen Säuren später nicht stören oder zersetzt oder abgebaut werden. Die Zugabe der Metalle in der Form ihrer Sulfate, Chloride oder Nitrate kann für Dotiermetalle ebenfalls geeignet sein, wenn dadurch der Gehalt an Sulfaten, Chloriden oder Nitraten im Produkt bestimmte Grenzwerte nicht übersteigt, die für die jeweilige Anwendung noch als akzeptabel angesehen werden.
Die bei der oben beschriebenen Herstellung des monometallischen oder gemischtmetallischen Phosphats der Nährstoffzusammensetzung verwendete Vorlagelösung (II) für die anschließende Fällung der Phosphate ist ebenfalls eine Phosphatlösung mit einem im Bereich von 5 bis 8 gepufferten pH-Wert. Die Vorlagelösung wird entweder aus einer wässrigen Phosphorsäurelösung durch Neutralisation mit einer wässrigen Alkalihydroxidlösung hergestellt oder direkt aus einer wässrigen Lösung eines oder mehrerer Alkaliphosphate. Für die Fällung der erfindungsgemäßen Phosphate wird die wässrige Lösung (I) zu der Vorlagelösung (II) zudosiert. Aufgrund des niedrigen pH-Wertes der phosphorsauren Lösung (I) dosiert man dabei gleichzeitig eine basische wässrige Alkalihydroxidlösung zu, um den pH-Wert des erhaltenen Reaktionsgemisches im Bereich von 5 bis 8 zu halten. Ein zu niedriger pH-Wert der Vorlagelösung (II) bzw. des resultierenden Reaktionsgemisches unter einem pH-Wert von 5 hat den Nachteil, dass sich neben der erwünschten erfindungsgemäßen Kristallphase auch weitere Kristallphasen bilden können, z. B. Metallhydrogen- oder Metalldihydrogenphosphate. Ein zu hoher pH-Wert der Vorlagelösung (II) über einem pH-Wert von 8 hat den Nachteil, dass sich Spuren von Metallhydroxiden bilden können, die eine unerwünschte Kontamination in den erfindungsgemäßen Produkten darstellen, die wenig löslich und daher als Nährstoff schlecht verfügbar sind. Vorzugsweise wird die basische wässrige Alkalihydroxidlösung so zudosiert, dass sich beim Zudosieren der Lösung (I) in dem Reaktionsgemisch ein pH-Wert im Bereich von 6 bis 7 einstellt. Dies hat den Vorteil, dass sich ausschließlich die erfindungsgemäße Kristallphase bildet.
Nach der Ausfällung des erfindungsgemäßen Phosphats wird dieses von der Reaktionslösung abgetrennt. Dies erfolgt auch wieder nach an sich bekannten Verfahren, beispielsweise Filtration, Zentrifugation, Sedimentation etc. Das von der Reaktionslösung abgetrennte Phosphat wird dann zweckmäßigerweise getrocknet, d. h. entwässert. Die Trocknung kann wahlweise unter Umgebungsatmosphäre, unter Schutzgasatmosphäre und/oder unter vermindertem Druck und/oder erhöhter Temperatur (über Raumtemperatur, 25°C) erfolgen. Die hierfür geeigneten Verfahren sind dem Fachmann auf dem Gebiet geläufig und bedürfen keiner näheren Beschreibung. Ergänzend wird auf die nachfolgenden Beispiele verwiesen. Bei der Trocknung wird freies Wasser von dem von der Reaktionslösung abgetrennten Rückstand entfernt. Je nach gewünschtem Produkt wird aber auch gebundenes Kristallwasser durch die Trocknung bis zu eine gewünschten Hydratstufe des Produktes entfernt. Vorzugsweise wird das Produkt bis zu einer Hydratstufe (M1 M2 M3...Mx)₃(PO₄)₂ · a H₂O mit 0 ≤ a ≤ 8, besonders bevorzugt bis zu einer Hydratstufe (M1 M2 M3...Mx)₃(PO₄)₂ · a H₂O mit 0 ≤ a ≤3, getrocknet. Eine Trocknung bis zu einer Hydratstufe mit 0 ≤ a ≤3 hat den Vorteil gegenüber höheren Hydratstufen, dass es sich um eine über einen weiten Temperaturbereich stabile Hydratstufe handelt und man somit keine Probleme bei der späteren Handhabung der erfindungsgemäßen Produkte hat.

In einer besonders bevorzugten Ausführungsform der Nährstoffzusammensetzung ist das Phosphat ein gemischtmetallisches Phosphat, welches wenigstens 2 verschiedene Metalle (M1 M2 M3...Mx) enthält. Die Erfindung hat bei der Herstellung gemischtmetallischer Phosphate erhebliche Vorteile gegenüber dem Stand der Technik hinsichtlich der Effizienz, der Verfahrenskosten, des Energieverbrauchs und der erzielbaren Produktreinheit. Darüber hinaus lassen sich die Anteile der verschiedenen Metalle in dem gemischtmetallischen Phosphat sehr einfach und genau einstellen. Des weiteren erlaubt das erfindungsgemäße Verfahren durch geeignete Wahl der Fällungsbedingungen, wie pH-Wert, Konzentrationen, Temperatur, etc., bestimmte Materialparameter, wie Kristallphase und Kationenverteilung, Morphologie, Kristallit- und Sekundärpartikelgröße sowie die chemische Reinheit der erhaltenen Produkte zu kontrollieren. Dies ist bei den bekannten Verfahren, bei denen Phosphate und andere Metallsalze gemischt und zur Fällung gebracht werden, nicht in solch einfacher Art und Weise oder nur eingeschränkt möglich. Zudem bedürfen alternative Herstellungsmethoden eines höheren Waschaufwandes und gehen daher in der Regel mit einem wesentlich höheren Energie- und Ressourcenaufwand einher.

Das gemischtmetallische Phosphat kann theoretisch beliebig viele verschiedene Metalle innerhalb der hierin angegebenen Auswahl enthalten. Vorzugsweise enthält das gemischtmetallische Phosphat jedoch nicht mehr als 10 verschiedene Metalle (M1 M2 M3...Mx), besonders bevorzugt nicht mehr als 6 verschiedene Metalle. In den meisten Fällen wird man zweckmäßigerweise ein gemischtmetallisches Phosphat der erfindungsgemäßen Art mit zwei, drei oder vier verschiedenen Metallen herstellen. Häufig ist es erwünscht, ein gemischtmetallisches Phosphat herzustellen, das ein oder zwei verschiedenen Metalle in hohen Anteilen als sog. Hauptmetalle enthält und ein oder mehrere Metalle in jeweils geringen Anteilen als sogenannte Dotierungsmetalle oder Dotierungen. Beispielsweise kann mit Vorteil ein Mangan oder Eisen als Hauptmetall enthaltendes erfindungsgemäßes Phosphat einen geringen Anteil eines weiteren Metalls, beispielsweise Mg, Zn, oder Cu, enthalten.

In biologischen Systemen, wie Pflanzen oder Mikroorganismen, hat die Bereitstellung der Nährstoffzusammensetzung eine entscheidende Bedeutung für die Aufrechterhaltung der Lebensfunktionen und des optimales Wachstums. Die Wichtigkeit der quantitativen und verhältnismäßigen Zusammenstellung der essentiellen Spurenelemente wurde bereits oben für die Anwendungsgebiete Pflanzen- und Tierernährung sowie für die industrielle Mikrobiologie dargestellt. Der Vorteil der erfindungsgemäßen Nährstoffzusammensetzung besteht in der Möglichkeit, gemischtmetallische Phosphate theoretisch mit beliebig vielen verschiedenen Metallen innerhalb der hierin definierten Auswahl zu kombinieren. Zudem können Dotierungsmetalle gezielt eingebunden werden. Der analytische Aufwand bei der präzisen Herstellung von komplexen Nährstoffmischungen reduziert sich deutlich, da die wesentlichen Komponenten in einer definierten Verbindung vorliegen. Die erfindungsgemäßen Produkte ermöglichen die optimal abgestimmte Kombination und anschließende Analyse verschiedener Elemente, um den Bedürfnissen der Pflanzen- und Tierernährung sowie der industriellen Mikrobiologie zu genügen. Die erfindungsgemäße Nährstoffzusammensetzung kann ein einziges monometallisches oder gemischtmetallisches Phosphat enthalten, sie kann aber auch eine Mischung aus zwei oder mehr monometallischen und/oder gemischtmetallischen Phosphaten enthalten, wodurch sich die Nährstoffzusammensetzung noch weiter an die Erfordernisse des jeweiligen biologischen Systems anpassen lässt. Eine Nährstoffzusammensetzung der erfindungsgemäßen Art kann so auch wie nach einem Baukastensystem aus mehreren monometallischen und/oder gemischtmetallischen Basisphosphaten zusammengestellt werden, um den Anforderungen des jeweiligen biologischen Systems zu genügen.
In einer weiteren bevorzugten Ausführungsform der erfindungsgemäßen Nährstoffzusammensetzung führt man die Ausfällung des Phosphats in Stufe e) bei einer Temperatur im Bereich von 5 bis 105°C durch. Die Temperatur lässt sich dabei durch eine geeignete Regeleinheit im Bereich +/- 5°C um den gewünschten Punkt konstant halten. Höhere Temperaturen führen im Allgemeinen zu einer ausgeprägteren Kristallinität bzw. beschleunigen das Wachstum der Kristallite der Produkte. Besonders bevorzugt führt man die Ausfällung des Phosphats bei einer Temperatur im Bereich von 10 bis 40°C durch, wodurch sich im Allgemeinen keine Notwendigkeit zum Erwärmen und/oder Kühlen zugunsten der Ökonomie und Ökologie des Verfahrens ergibt.
In einer weiteren bevorzugten Ausführungsform der erfindungsgemäßen Nährstoffzusammensetzung dispergiert man in der wässrigen Lösung (I) vor der Zudosierung zu der Vorlagelösung (II) eine oberflächenaktive Substanz, wie Netzmittel, Penetrationsmittel oder Haftmittel (Pflanzenöle, Rapsmethylester, Eiweißderivate, ionische und nichtionische Netzmittel, Organosilikone, Polymere, Wachse u.a.) oder aktive Agenzien, wie Formulierungshilfsmittel (Tenside, Emulgatoren, Dickungsmittel, Entschäumer, o. ä.), synthetische und organische Chelate bzw. sequestrierende Produkte, Säurungsmittel, Phosphit, Pflanzenschutzagentien (inkl. Safener derselben), Inhibitoren, Vitamine, welche die Qualität und Wirksamkeit der erfindungsgemäßen Produkte in der späteren Anwendung verbessern sowie den potentiellen Anwendungsbereich erweitern.

Zur Erhöhung der Dispersionsstabilität der erfindungsgemäßen Nährstoffzusammensetzung in einer flüssigen Phase kann es vorteilhaft sein, das erfindungsgemäße Produkt durch Einwirkung mechanischer Kräfte in der flüssigen Phase fein zu verteilen. Dazu eignen sich neben bekannten Methoden zur Einbringung hoher Scherkräfte besonders die Verwendung von Rührwerkskugelmühlen. Durch den Einsatz einer Rührwerkskugelmühle kann neben der feinen Verteilung der erfindungsgemäßen Produkte auch deren mittlere Partikelgröße bzw. Agglomeratgröße modifiziert werden. So lässt sich z.B. die mittlere Korngröße auf <500 nm reduzieren. Die spezifische Oberfläche (nach BET-Methode) kann dabei zwischen 2 - 90m²/g betragen, bevorzugt 30 - 60m²/g. Die erhaltenen Dispersionen sind sehr stabil und weisen auch nach mehreren Tagen kaum eine Tendenz zur Sedimentation des Feststoffes auf. Dem Fachmann ist bekannt, dass sich die Stabilität der Dispersion mit Vorteil durch den Zusatz von oberflächenaktiven Substanzen verbessern lässt.

In einer weiteren bevorzugten Ausführungsform der Nährstoffzusammensetzung wird das Phosphat wie beschrieben gefällt, anschließend jedoch nicht isoliert. Vielmehr nutzt man einen in der Lösung vorzugsweise vorherrschenden molaren Überschuss an Phosphorsäure, um der Reaktionslösung nach der Fällung weitere Kationen in Form von Alkalihydroxid, Erdalkalihydroxid oder Ammoniak unter Bildung von Ammoniumionen zuzuführen, bis die Reaktionslösung ein Leitfähigkeitsminimum aufweist. Es kann zweckmäßig sein, der Lösung zur Neutralisation Kaliumhydroxid hinzuzufügen, da Kalium einen essentiellen Wachstumsfaktor für Pflanzen darstellt. Das resultierende Gemisch, bestehend aus dem Feststoff des erfindungsgemäßen Phosphats, Phosphatanionen, Kaliumkationen und/oder Ammoniumkationen, wird anschließend unter erhöhter Temperatur und/oder vermindertem Druck entwässert, wodurch ein Produkt entsteht, welches neben den erfindungsgemäßen Nährstoffen zusätzlich pflanzenverfügbares Kalium und/oder Ammonium in Form von Phosphaten enthält.

In einer weiteren bevorzugten Ausführungsform der Nährstoffzusammensetzung enthält die Vorlagelösung (II) die Phosphationen, berechnet als P₂O₅, in einer Konzentration im Bereich von 0,35 bis 1,85 mol/L. Eine Phosphationenkonzentration unter 0,35 mol/L P₂O₅ hat den Nachteil, dass man das Reaktionsgemisch unnötig verdünnt und im Falle einer kommerziellen Anwendung ein unnötig großes Volumen an Filtrat behandeln müsste. Eine Phosphationenkonzentration über 1,85 mol/L P₂O₅ hat den Nachteil, dass sich das Reaktionsgemisch aufgrund eines hohen Feststoffanteils und daraus resultierender hoher Viskosität nicht optimal durchmischen lässt. Dadurch kann es zu lokalen Konzentrationsgradienten führen, was sich negativ auf die Bildung der gewünschten Kristallphase auswirken kann.

Die erfindungsgemäße Nährstoffzusammensetzung kann weiterhin sauer wirkende Bestandteile (Säuerungsmittel) enthalten, die die Zusammensetzung zusammen mit den enthaltenen Nährstoffen in zeitabhängiger, quantitativ kontrollierter Weise abgibt. Die Wirkung von ammoniumhaltigem Stickstoffdünger und von elementarem Schwefel auf den pH-Wert von landwirtschaftlich kultivierten Böden oder Pflanzenerde ist bekannt. Die erfindungsgemäße Nährstoffzusammensetzung bietet die Möglichkeit, Säuerungsmittel verschiedener Art, wie elementaren Schwefel oder dessen oxidierte Formen, beispielsweise Sulfat, mit in das erfindungsgemäße Produkt zu integrieren. Durch beabsichtigte Säuerungseffekte im Boden, insbesondere im Rhizosphärenbereich von Pflanzen, hat das erfindungsgemäße Produkt potentiell verbesserte Eigenschaften gegenüber Nährstoffzusammensetzungen nach dem Stand der Technik bei der Vermeidung und Behebung von Nährstoffmangel zum Beispiel in stark kalkhaltigen und alkalischen Böden. Zudem weisen die erfindungsgemäßen Produkte an sich einen sauren Charakter auf, d. h. wässrige Dispersionen der erfindungsgemäßen Produkte zeigen einen sauren pH-Wert im Bereich von 2 bis 5.
Zweckmäßigerweise beträgt die Konzentration der Phosphorsäure in der bei der Herstellung der erfindungsgemäßen Nährstoffzusammensetzung hergestellten wässrigen Lösung (I) 5% bis 85%, vorzugsweise 10% bis 40%, besonders bevorzugt 15% bis 30%, ganz besonders bevorzugt 20% bis 25%, bezogen auf das Gewicht der wässrigen Lösung (I).

In einer weiteren bevorzugten Ausführungsform der Erfindung führt man die Umsetzung der oxidischen Metallverbindungen mit den elementaren Formen oder Legierungen der Metalle in der Lösung (I) bei einer Temperatur im Bereich von 5°C bis 105°C, vorzugsweise im Bereich von 10°C bis 75°C, besonders bevorzugt im Bereich von 20°C bis 50°C, durch.
Des Weiteren ist es vorteilhaft, die Umsetzung der oxidischen Metallverbindungen mit den elementaren Formen oder Legierungen der Metalle in der Lösung (I) unter intensivem Durchmischen durchzuführen, um eine gleichmäßige Reaktion zu erzielen und lokale Überkonzentrationen innerhalb der Reaktionslösung zu vermeiden.
Zweckmäßigerweise führt man die Umsetzung der oxidischen Metallverbindungen mit den elementaren Formen oder Legierungen der Metalle in der Lösung (I) für einen Zeitraum von 1 min bis 240 min, vorzugsweise von 5 min bis 120 min, besonders bevorzugt von 30 min bis 90 min durch. Die erforderliche Reaktionsdauer für eine ausreichend vollständige Umsetzung hängt von den Reaktanden und den Reaktionsbedingungen ab und lässt sich vom Fachmann durch wenige einfache Experimente leicht ermitteln. Bei einer zu kurzen Reaktionsdauer wird die Umsetzung in der Regel nicht ausreichend vollständig sein und zu viel nicht umgesetzte Ausgangsstoffe liefern. Die Reaktionszeit sollte aber auch nicht zu lange sein, da das Verfahren dann weniger wirtschaftlich ist. Eine vollständige Reaktion ist zudem vorteilhaft, um eine definierte Metallzusammensetzung zu erhalten. Wie beschrieben kann gegebenenfalls durch Zusatz geeigneter Metallsalze nachgebessert werden, was den Prozess allerdings unnötig verteuert bzw. die Gefahr einer nicht tolerierbaren Anionenkontamination steigert.

In einer weiteren Ausführungsform der Erfindung umfasst die Nährstoffzusammensetzung ein oder mehrere oberflächenaktive Substanzen (Tenside) in einer Menge von 0,05 bis 10 Gew.-%, vorzugsweise 1,5 bis 5 Gew.-%, besonders bevorzugt 1,8 bis 4 Gew.-%, bezogen auf das Gewicht der Nährstoffzusammensetzung. Die Vorteile dieser Ausführungsform sind hierin oben beschrieben. Die oberflächenaktiven Substanzen können direkt der Reaktionsmischung, beispielsweise der Lösung (I) oder dem nach der Fällung der Phosphate erhaltenen Ansatz zugegeben werden. Alternativ können die oberflächenaktiven Substanzen auch dem isolierten Filterkuchen vor seiner Trocknung oder dem Produkt nach der Trocknung durch Mischen, Aufsprühen oder in Granulationsverfahren hinzugefügt werden.
Besonders bevorzugt enthält das Mangan (Mn) enthaltende gemischtmetallische Phosphat bezogen auf alle enthaltenen Metalle wenigstens 40 At.-% Mn, vorzugsweise wenigstens 60 At.-% Mn, besonders bevorzugt wenigstens 80 At.-% Mn, ganz besonders bevorzugt wenigstens 90 At.-% Mn.

In einer weiteren Ausführungsform der Nährstoffzusammensetzung enthält das wenigstens eine monometallische oder gemischtmetallische Phosphat Mangan (Mn) und weist im Pulverröntgenbeugungsdiagramm Peaks bei 10,96 ± 0,05, 12,78 ± 0,17, 14,96 ± 0,13, 17,34 ± 0,15, 18,98 ± 0,18, 21,75 ± 0,21, 22,07 ± 0,11, 22,97 ± 0,10, 25,93 ± 0,25, 26,95 ± 0,30, 27,56 ± 0,10, 29,19 ± 0,12, 29,84 ± 0,21, 30,27 ± 0,12, 34,86 ± 0,21, 35,00 ± 0,20, 35,33 ± 0,30, 35,58 ± 0,10, 35,73 ± 0,12, 42,79 ± 0,45, 43,37 ± 0,45, 44,70 ± 0,15 und 44,93 ± 0,20 Grad Zwei-Theta, basierend auf CuKα-Strahlung, auf.
Eine solche durch Pulverröntgenbeugungsdaten bislang nicht beschriebene Struktur eines monometallischen oder gemischtmetallischen erfindungsgemäßen Phosphats lässt sich erreichen wenn das Phosphat, bezogen auf alle enthaltenen Metalle wenigstens 40 At.-% Mn, vorzugsweise wenigstens 60 At.-% Mn, besonders bevorzugt wenigstens 80 At.-% Mn, ganz besonders bevorzugt wenigstens 90 At.-% Mn oder neben verfahrensbedingten Verunreinigungen als Metall nur Mangan (Mn) enthält. Dieses Phosphat weist vorzugsweise eine orthorhombische Elementarzelle mit Gitterparametern von 13,2 ± 0,2, 8,6 ± 0,2 und 8,1 ± 0,2 Angström auf.
Die Erfindung umfasst auch die Verwendung eines monometallischen oder gemischtmetallischen Phosphats vom Typ (M1 M2 M3...Mx)₃(PO₄)₂ · a H₂O mit 0 ≤ a ≤ 9, zur Herstellung einer Nährstoffzusammensetzung für biologische Systeme, wie Menschen, Tiere, Pflanzen und Mikroorganismen.
Das erfindungsgemäße Produkt ist als Nährstoff in allen Bereichen der Pflanzenernährung einsetzbar, beispielsweise in der Landwirtschaft und im Gartenbau zur Nährstoffzuführung in Getreide, Hackfrüchte, Obst, Gemüse, Zierpflanzen, Rasen, Grünflächen, Energiepflanzen etc. Das erfindungsgemäße Produkt kann als Feststoff oder Flüssigkeit alleine oder als Bestandteil von Formulierungen, beispielsweise in der Form von Beschichtungen von granulierten Düngemittelformen, in sogenannten Controlled-Release-Formulierungen (CRF) und Slow-Release-Formulierungen (SRF) oder in sogenannten kondensierten Düngemittelformen, angewendet werden. Das erfindungsgemäße Produkt kann insbesondere im Bereich der Bewässerung von Kulturpflanzen (Fertigation), wozu zum Beispiel Systeme der Tröpfchenbewässerung zählen, Mikroirrigation oder Hydroponics Anwendung finden. Das Produkt kann in der Bodenapplikation und in der Blattapplikation eingesetzt werden. Des Weiteren kann das Produkt im Bereich der Saatgutbehandlung, bei der Synthese von Düngemittelprodukten, z. B. polymeren Strukturen auf Ammoniumphosphatbasis oder Phosphat-Silikat-Fritten, zur Beimischung bzw. integrierenden Aufnahme von Pestiziden, Herbiziden, sogenannten Safenern derselben und biologischen Pflanzenschutz- und Nähragenzien eingesetzt werden.

Das erfindungsgemäße Produkt ist auch als Nährstoff in allen Bereichen der Ernährung von Menschen und Tieren einsetzbar, beispielsweise zur Biofortifikation, zur Nährstoffergänzung von Lebensmitteln und Futtermitteln für landwirtschaftliche Nutztiere, Sport- oder Heimtiere und zur bedarfs- und altersgerechten Deckung des Nährstoffbedarfs und damit für die Sicherstellung der Gesundheit und Leistung von Mensch und Tier.

Das erfindungsgemäße Produkt ist weiterhin als Nährstoff in der industriellen Mikrobiologie einsetzbar, beispielsweise in der Biopolymerproduktion, bei der mikrobiologischen Nahrungsmittelproduktion, in Nähr- und Kulturmedien für Zellen und Mikroorganismen, in der Fermentation, bei der mikrobiologischen Sanierung, in der Abfallbehandlung sowie bei der mikrobiologischen Herstellung von Produkten im Bereich des Gesundheitswesens.

Die Verwendung der erfindungsgemäßen Phosphate in einer Nährstoffzusammensetzung hat gegenüber der Verwendung bekannter Nährstoffe den Vorteil, dass die verschiedenen gewünschten Metallkationen bereits in idealer isotrop verteilter Form in einer hochreinen Verbindung vorliegen, die hinsichtlich ihrer Kristallphase, Zusammensetzung und Morphologie eindeutig mit einfachen und bekannten Methoden charakterisierbar ist. Die feinteilige Plättchenform der Primärkristallite gewährleistet dabei eine größtmögliche aktive Oberfläche und geringstmögliche Diffusionsstrecken und Diffusionszeiten bei der Bereitstellung der Nährstoffe.

Ein weiterer Vorteil besteht in der Abwesenheit größerer Mengen unerwünschter anionischer Verunreinigungen, wie beispielsweise Sulfaten, Nitraten, Chloriden, Carbonaten und Carboxylaten, was sich insbesondere positiv bei der Verabreichung der Nährstoffe an Organismen auswirkt, die negativ auf diese Anionen reagieren können oder die aufgrund einer Geschmacksbeeinflussung durch solche Verunreinigungen die Aufnahme von Nährstoffen verweigern. Phosphate gelten gegenüber den genannten Anionen hingegen als Geschmacksneutral.

### Beschreibung der Figuren

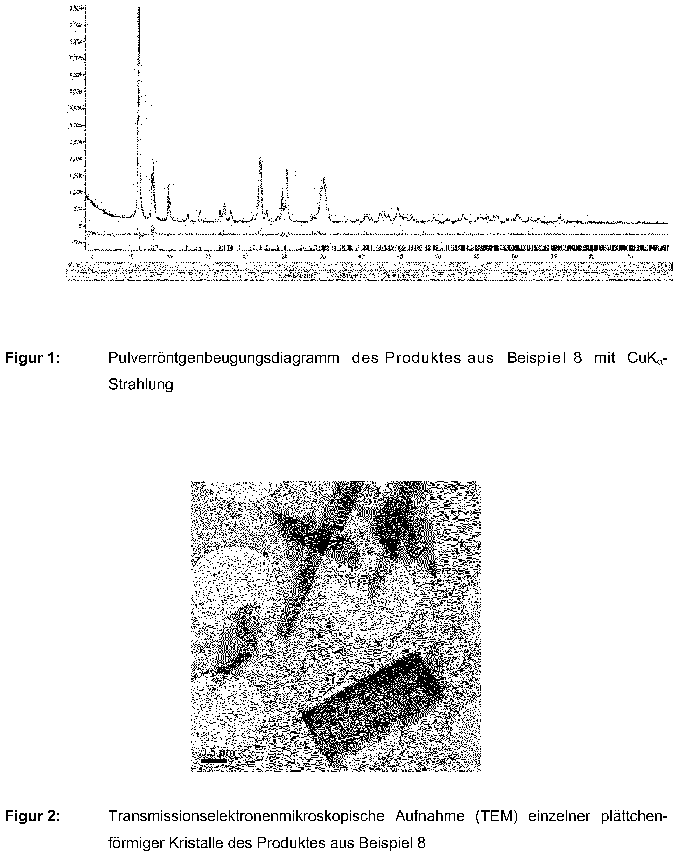

- **Figur 1:**: Pulverröntgenbeugungsdiagramm des Produktes aus Beispiel 8 mit CuK_{α}-Strahlung;
- **Figur 2:**: Transmissionselektronenmikroskopische Aufnahme (TEM) einzelner plättchenförmiger Kristalle des Produktes aus Beispiel 8;

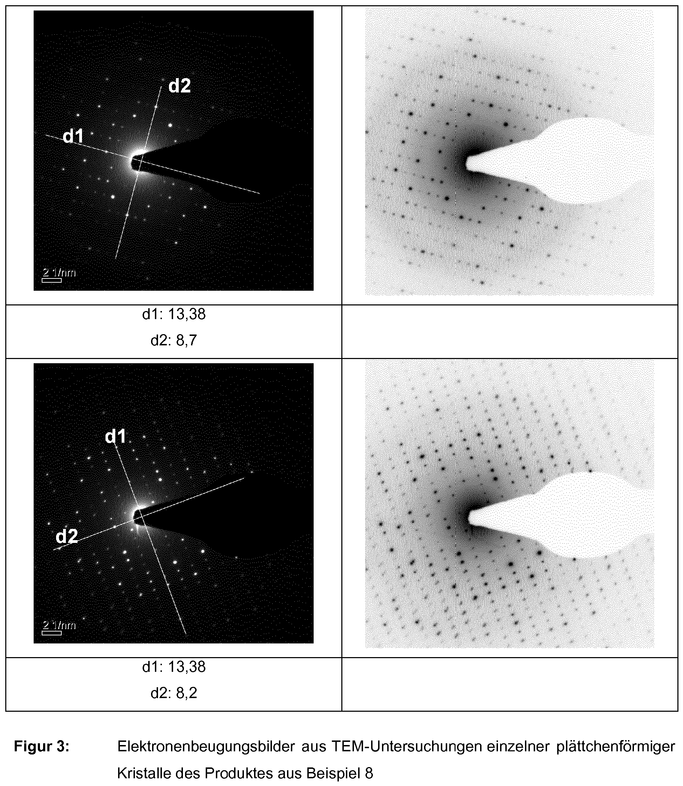

- **Figur 3:**: Elektronenbeugungsbilder aus TEM-Untersuchungen einzelner plättchenförmiger Kristalle des Produktes aus Beispiel 8;

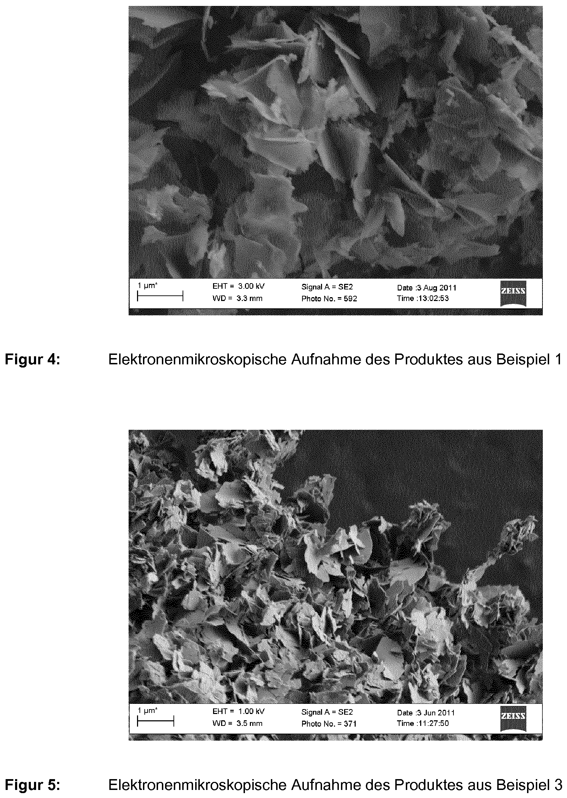

- **Figur 4:**: Elektronenmikroskopische Aufnahme des Produktes aus Beispiel 1;
- **Figur 5:**: Elektronenmikroskopische Aufnahme des Produktes aus Beispiel 3;

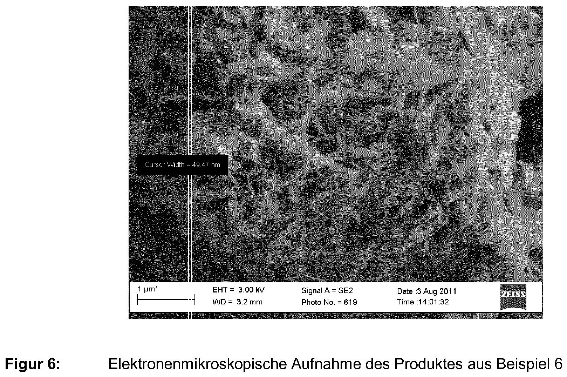

- **Figur 6:**: Elektronenmikroskopische Aufnahme des Produktes aus Beispiel 6;

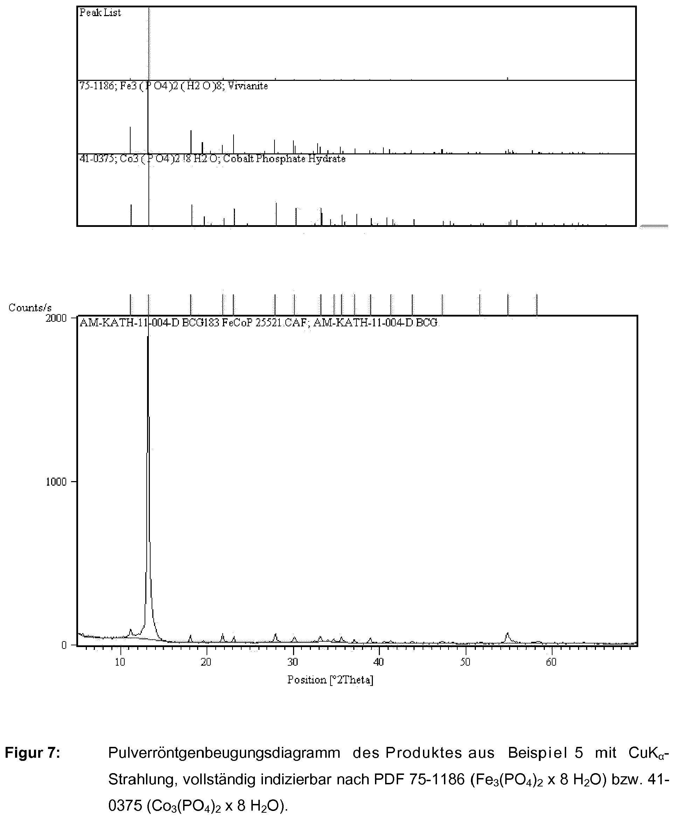

- **Figur 7:**: Pulverröntgenbeugungsdiagramm des Produktes aus Beispiel 5 mit CuK_{α}-Strahlung, vollständig indizierbar nach PDF 75-1186 (Fe₃(PO₄)₂ x 8 H₂O) bzw. 41-0375 (Co₃(PO₄)₂ x 8 H₂O);

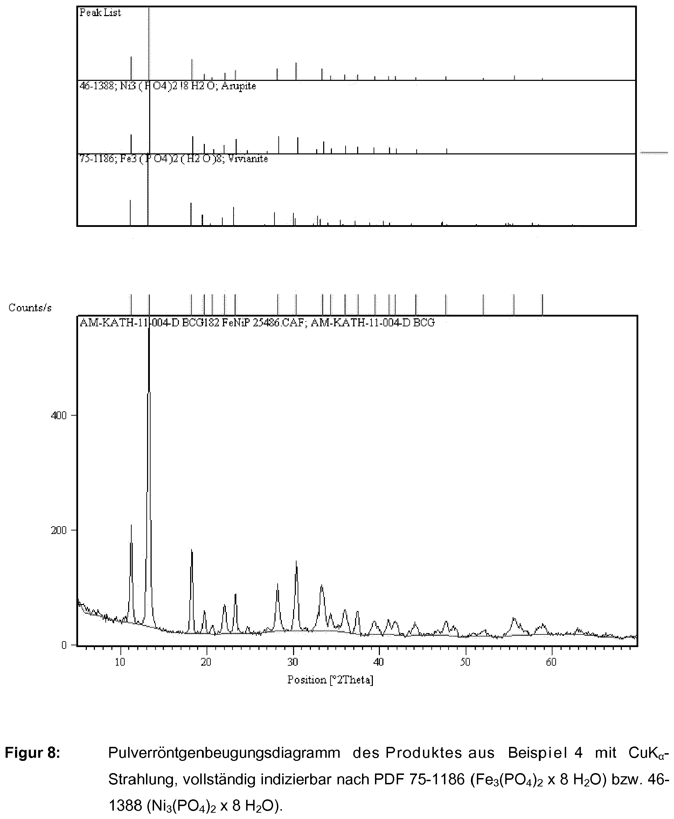

- **Figur 8:**: Pulverröntgenbeugungsdiagramm des Produktes aus Beispiel 4 mit CuK_{α}-Strahlung, vollständig indizierbar nach PDF 75-1186 (Fe₃(PO₄)₂ x 8 H₂O) bzw. 46-1388 (Ni₃(PO₄)₂ x 8 H₂O);

### Beispiele

### Beispiel 1

Es wurde eine phosphorsaure Lösung (I) aus 80g 75%iger H₃PO₄ und 160g entionisiertem Wasser hergestellt. In diese Lösung (I) wurden 14,3g Mn₃O₄ und 3,5g Fe gegeben. Die Lösung (I) wurde 90 Minuten bei Raumtemperatur gerührt und anschließend filtriert, um eventuell verbliebene Rückstände aus der Lösung zu entfernen.

Des Weiteren wurde eine basische Lösung aus 40g NaOH und 1000g entionisiertem Wasser hergestellt. Anschließend wurden 25g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 120°C im Umlufttrockenschrank getrocknet.

### Beispiel 2

Es wurde eine phosphorsaure Lösung (I) aus 230g 75%iger H₃PO₄ und 460g entionisiertem Wasser hergestellt. In diese Lösung (I) wurden 8,9g MnO₂ sowie 30,1g Mn₃O₄ und 13,1g Fe gegeben. Die Lösung (I) wurde 60 Minuten bei Raumtemperatur gerührt und anschließend filtriert, um eventuell verbliebene Rückstände aus der Lösung zu entfernen.

Des Weiteren wurde eine basische Lösung aus 120g NaOH und 3000g entionisiertem Wasser hergestellt. Anschließend wurden 25g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 90°C im Umlufttrockenschrank getrocknet.

### Beispiel 3

Es wurde eine phosphorsaure Lösung (I) aus 80g 75%iger H₃PO₄ und 160g entionisiertem Wasser hergestellt. In diese Lösung (I) wurden 14,3g Mn₃O₄ und 3,8g Co gegeben. Die Lösung (I) wurde 60 Minuten bei 60°C gerührt und anschließend filtriert, um eventuell verbliebene Rückstände aus der Lösung zu entfernen.

Des Weiteren wurde eine basische Lösung aus 40,4g NaOH und 229g Wasser hergestellt. Anschließend wurden 25g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 70°C im Umlufttrockenschrank getrocknet.

### Beispiel 4

Es wurde eine phosphorsaure Lösung (I) aus 80g 75%iger H₃PO₄ und 160g entionisiertem Wasser hergestellt. In diese Lösung (I) wurden 14,1g Fe₃O₄ und 3,5g Fe gegeben. Die Lösung (I) wurde 60 Minuten bei 60°C gerührt und anschließend 33,1g NiSO₄·6H₂O gelöst in 100g Wasser zugesetzt. Die resultierende Lösung wurde filtriert, um eventuell verbliebene Rückstände zu entfernen.

Des Weiteren wurde eine basische Lösung aus 50g NaOH und 500g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 100°C im Umlufttrockenschrank getrocknet.

### Beispiel 5

Es wurde eine phosphorsaure Lösung (I) aus 80g 75%iger H₃PO₄ und 160g entionisiertem Wasser hergestellt. In diese Lösung (I) wurden 14,1g Fe₃O₄ und 3,8g Co gegeben. Die Lösung (I) wurde 60 Minuten bei 60°C gerührt und anschließend filtriert, um eventuell verbliebene Rückstände aus der Lösung zu entfernen.

Des Weiteren wurde eine basische Lösung aus 50g NaOH und 500g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 70°C im Umlufttrockenschrank getrocknet.

### Beispiel 6

Es wurde eine phosphorsaure Lösung (I) aus 80g 75%iger H₃PO₄ und 160g entionisiertem Wasser hergestellt. In diese Lösung (I) wurden 14,4g Co₃O₄ und 3,8g Co gegeben. Die Lösung (I) wurde 60 Minuten bei Raumtemperatur gerührt und anschließend filtriert, um eventuell verbliebene Rückstände aus der Lösung zu entfernen.

Des Weiteren wurde eine basische Lösung aus 41,9g NaOH und 376,8g Wasser hergestellt. Anschließend wurden 10g H₃PO₄ mit mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 7

Es wurde eine phosphorsaure Lösung (I) aus 80g 75%iger H₃PO₄ und 160g entionisiertem Wasser hergestellt. In diese Lösung (I) wurden 14,1g Fe₃O₄ und 3,5g Fe gegeben. Die Lösung (I) wurde 60 Minuten bei 60°C gerührt und anschließend filtriert, um eventuell verbliebene Rückstände aus der Lösung zu entfernen.

Des Weiteren wurde eine basische Lösung aus 17,6g NaOH und 158,7g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden 100 g der phosphorsauren Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 8

Es wurde eine phosphorsaure Lösung (I) aus 80g 75%iger H₃PO₄ und 160g entionisiertem Wasser hergestellt. In diese Lösung (I) wurden 14,1g Mn₃O₄ und 4,5g Mn gegeben. Die Lösung (I) wurde 90 Minuten bei 20°C gerührt und anschließend filtriert, um eventuell verbliebene Rückstände aus der Lösung zu entfernen.

Des Weiteren wurde eine basische Lösung aus 17,6g NaOH und 158,7g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden 100 g der phosphorsauren Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 9

Es wurde eine phosphorsaure Lösung (I) aus 80g 75%iger H₃PO₄ und 160g entionisiertem Wasser hergestellt. In diese Lösung (I) wurden 14,4g Co₃O₄ und 3,5g Fe gegeben. Die Lösung (I) wurde 60 Minuten bei Raumtemperatur gerührt und anschließend filtriert, um eventuell verbliebene Rückstände aus der Lösung zu entfernen.

Des Weiteren wurde eine basische Lösung aus 41,9g NaOH und 376,8g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 10

Es wurde eine phosphorsaure Lösung (I) aus 80g 75%iger H₃PO₄ und 160g entionisiertem Wasser hergestellt. In diese Lösung (I) wurden 14,3g Mn₃O₄ und 3,5g Fe gegeben. Die Lösung (I) wurde 90 Minuten bei Raumtemperatur gerührt und anschließend 17,7g CoSO₄·6H₂O gelöst in 20g Wasser zugegeben. Anschließend wurde die resultierende Lösung filtriert, um eventuell verbliebene Rückstände zu entfernen.

Des Weiteren wurde eine basische Lösung aus 40g NaOH und 1000g Wasser hergestellt. Anschließend wurden 25g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 11

Es wurde eine phosphorsaure Lösung (I) aus 80g 75%iger H₃PO₄ und 160g entionisiertem Wasser hergestellt. In diese Lösung (I) wurden 14,3g Mn₃O₄ und 3,5g Fe gegeben. Die Lösung (I) wurde 90 Minuten bei 60°C gerührt und anschließend 2,6g Mg(Acetat)₂·6H₂O gelöst in 20g Wasser zugesetzt. Anschließend wurde die resultierende Lösung filtriert, um eventuell verbliebene Rückstände zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 12

Es wurde eine phosphorsaure Lösung (I) aus 80g 75%iger H₃PO₄ und 160g entionisiertem Wasser hergestellt. In diese Lösung (I) wurden 14,3g Mn₃O₄ und 2,2g Fe sowie 1,5g Co gegeben. Die Lösung (I) wurde 90 Minuten bei Raumtemperatur gerührt und anschließend filtriert, um eventuell verbliebene Rückstände aus der Lösung zu entfernen.

Des Weiteren wurde eine basische Lösung aus 40g NaOH und 1000g entionisiertem Wasser hergestellt. Anschließend wurden 25g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde aufgeteilt und jeweils ein Teil bei 60°C bzw. 120°C im Umlufttrockenschrank getrocknet.

### Beispiel 13

Es wurde eine phosphorsaure Lösung (I) aus 80g 75%iger H₃PO₄ und 160g entionisiertem Wasser hergestellt. In diese Lösung (I) wurden 14,3g Mn₃O₄ und 2,2g Fe sowie 1,5g Co gegeben. Die Lösung (I) wurde 90 Minuten bei Raumtemperatur gerührt und anschließend filtriert, um eventuell verbliebene Rückstände aus der Lösung zu entfernen. Zu dieser Lösung anschließend mit 2,6g Mg(Acetat)·6H₂O gelöst in 20g Wasser vergesetzt.

Des Weiteren wurde eine basische Lösung aus 40g NaOH und 1000g entionisiertem Wasser hergestellt. Anschließend wurden 25g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde aufgeteilt und jeweils ein Teil bei 60°C bzw. 120°C im Umlufttrockenschrank getrocknet.

### Beispiel 14 (Nicht erfindungsgemäß)

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 1,94g Al₂(SO₄)₃·18H₂O gelöst in 20ml Wasser zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 15

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 0,65g CuCO₃·Cu(OH)₂·0.5H₂O gelöst in 20ml verdünnter HCl zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 16 (Nicht erfindungsgemäß)

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 1,09g LaCl₃·7H₂O gelöst in 20ml Wasser zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 17 (Nicht erfindungsgemäß)

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 1,12g EuCl₃·7H₂O gelöst in 20ml Wasser zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Voriagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.) Nicht erfindungsgemäß.

### Beispiel 18 (Nicht erfindungsgemäß)

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 0,66g SnCl₂·2H₂O gelöst in 20ml verdünnter HCl zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 19 (Nicht erfindungsgemäß)

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 0,95g ZrOCl₂ gelöst in 20ml verdünnter HCl zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

### Beispiel 20

Es wurde eine phosphorsaure Lösung (I) aus 1090g 75%iger H₃PO₄ und 2380g entionisiertem Wasser hergestellt. In diese Lösung (I) wurden 209g Mn₃O₄ und 51g Fe gegeben. Die Lösung (I) wurde 90 Minuten bei Raumtemperatur gerührt und anschließend wurden zu 100 g dieser Lösung 0,33g CaCl₂ gelöst in 20ml verdünnter HCl zur Lösung zugesetzt und filtriert, um eventuell verbliebene Rückstände aus der Lösung zu entfernen.

Des Weiteren wurde eine basische Lösung aus 50g NaOH und 450g Wasser hergestellt. Anschließend wurden 10g H₃PO₄ mit 100g Wasser in einem Reaktionsgefäß vorgelegt und mit der basischen Lösung auf einen pH-Wert von 7 neutralisiert unter Erhalt der Vorlagelösung (II). Zu der neutralisierten Vorlagelösung (II) wurden die phosphorsaure Me²⁺-Lösung (I) und die basische Lösung gleichzeitig unter Rühren so zudosiert, dass der pH-Wert der Vorlagelösung (II) stets zwischen 6,5 und 7 gehalten wurde. Nach Beendigung der Zudosierung wurde die Lösung für weitere 5 Minuten gerührt. Der gefällte Feststoff wurde anschließend mit Hilfe eines Nutschenfilters abgesaugt und mit entionisiertem Wasser gewaschen. Der Filterkuchen wurde bei 80°C im Umlufttrockenschrank getrocknet.

Tabelle 1 fasst die Beispiele 1 bis 20 und die Ergebnisse der analytischen Untersuchungen der jeweiligen Produkte zusammen.

Die Beispiele zeigen, dass erfindungsgemäße Nährstoffe mit monometallischen bzw. multimetallischen Phosphaten mit dem erfindungsgemäßen Kristallwassergehalt und einem Verhältnis von Metall zu Phosphat (PO₄) von etwa 3 zu 2 erhalten werden. Die Metalle Fe, Mn, Ni und Co liegen, soweit enthalten, in den Produkten somit in ihrer zweiwertigen Form vor. Es ist denkbar, dass sehr geringe Mengen dieser Metalle in einer anderen Oxidationsstufe vorliegen, beispielsweise kann Fe an den Partikeloberflächen in geringem Maße oxidieren, z. B bei der Trocknung und hohen Temperaturen. Solche geringfügigen Abweichungen von der zweiwertigen Form sind im Sinne der vorliegenden Erfindung wie unvermeidbare Verunreinigungen anzusehen, wodurch der Schutzbereich der Erfindung nicht verlassen wird. Die Dotierungsmetalle können in Form ihrer stabilen bzw. bekannten Oxidationsstufen vorliegen.

Die Produkte der Beispiele 1 bis 20 konnten in der Röntgenbeugungsanalyse alle entweder dem Vivanit-Kristallstrukturtyp [Fe₃(PO₄)₂ · 8 H₂O] oder dessen Dehydratationsstufen oder einem bislang nicht beschriebene Kristallstrukturtyp, der hierin als [Mn₃(PO₄)₂ · 3H₂O]-Kristallstrukturtyp bezeichnet wird, zugeordnet werden.

Die Trocknungstemperatur hatte einen Einfluss auf den Gehalt an gebundenem Kristallwasser. Je höher die Trocknungstemperatur und je länger die Trocknungsdauer waren, desto geringer war der Kristallwassergehalt. Ein verminderter Wasserpartialdruck beschleunigte die Trocknung.

Die Produkte der Beispiele 1, 2, 3, 8 und 10 bis 20 zeigten in pulverröntgenographischen Analysen sowie in Elektronenbeugungsanalysen im Transmissionselektronenmikroskop Diffraktogramme, die eine orthorhombische Elementarzelle mit Achslängen von 13,2 +/- 0,2; 8,6 +/- 0,2 und 8,1 +/- 0,2 Angström belegen. Diese Elementarzelle mit den genannten und je nach Zusammensetzung der Metallkomponenten innerhalb der angegebenen Bereiche leicht variierenden Parametern ist für Verbindungen der Zusammensetzung Mn₃(PO₄)₂ · 3H₂O sowie deren (pseudo)binäre, (pseudo)ternäre oder (pseudo)quaternäre Varianten in den einschlägigen Datenbanken bislang nicht bekannt. Die Struktur wird beobachtet, wenn das erfindungsgemäße Produkt ausschließlich Mn als Metall enthält (siehe Beispiel 9), aber auch wenn weitere Metalle enthalten sind. Die Ergebnisse der Beispiele legen lediglich nahe, dass ein Mangangehalt von wenigstens etwa 55%, bezogen auf alle enthaltenen Metalle, erforderlich bzw. ausreichend ist, um den beschriebenen [Mn₃(PO₄)₂ · 3H₂O]-Kristallstrukturtyp auszubilden. Es ist jedoch nicht auszuschließen, dass auch andere Kationenverhältnisse als die in den Beispielen untersuchten zur Ausbildung dieses Strukturtyps führen können.

Die Produkte mit dem hierin angegebenen [Mn₃(PO₄)₂ · 3H₂O]-Kristallstrukturtyp zeigen alle das gleiche analytische Röntgenbeugungsbild, lediglich die Peakpositionen weisen in Abhängigkeit von Art und Konzentration der verschiedenen Metalle geringfügige Verschiebungen auf, die durch unterschiedliche lonenradien und variierenden Besetzungsgrad der Kationenplätze im Kristallgitter der Elementarzelle hervorgerufen werden.

Für eine Verbindung vom Typ Mn₃(PO₄)₂ · 3H₂O gibt es in der Datenbank des ICDD (International Centre for Diffraction Data) unter der Nummer 003-0426 einen PDF-Eintrag (Powder Diffraction File), allerdings liegen zwischen den dort hinterlegten Daten und den für die erfindungsgemäßen Produkte vom [Mn₃(PO₄)₂ · 3H₂O]-Kristallstrukturtyp hier experimentell bestimmten Werten keine Übereinstimmungen hinsichtlich Lage, Anzahl und Intensität der beschriebenen Reflexe vor. Für die in der ICDD-Datenbank beschriebene Verbindung sind zudem keine kristallographischen Daten hinterlegt, welche die Kristallstruktur näher beschreiben. Die erfindungsgemäßen Produkte vom hierin angegebenen [Mn₃(PO₄)₂ · 3H₂O]-Kristallstrukturtyp wurden somit bislang nicht beschrieben.

Die erfindungsgemäßen Produkte weisen überwiegend eine plättchenförmige Morphologie der Primärkristallite auf, wobei sich die Plättchendicke im Rasterelektronenmikroskop in einer Größenordnung von etwa 30 bis 50 nm, in manchen Fällen auch < 30 nm, bestimmen lässt. Bei Produkten mit einem hohen Nickelanteil (Beispiele 4 und 5) konnten auch sphärische Primärkristallite gefunden werden.

Die plättchenförmige Morphologie der hergestellten Produkte erlaubt prinzipiell eine dichte Packung der Kristallite, d.h. die Plättchen können sich bei geringerem Ausschlussvolumen, als das bei runden sphärischen Partikeln der Fall ist, stapeln. Schichtartig aufgebaute Aggregate bzw. Agglomerate dieses Materials lassen sich durch gängige Methoden unter Einwirkung von Scherkräften leicht in Dispersionen der Primärpartikel überführen.

**Tabelle 1**

| | **Eingesetzte elementare Metalle, oxidische Metallverbindungen und Salze** | | | | | **Analytische Ergebnisse** | | | | | |
|---|---|---|---|---|---|---|---|---|---|---|---|
| **Bsp.** | **M1** | **M2** | **M3** | **M4** | **T*** | **M1** [Gew.-%] | **M2** [Gew.-%] | **M3** [Gew-%] | **M4** [Gew.-%] | **Kristallstruktur** | **Morphologie** |
| 1 | Fe | Mn3O4 | - | - | 120 | 24,4 | 75,6 | - | - | Mn3(PO4)2 · 3 H2O | Plättchen |
| 2 | Fe | MnO2 | Mn3O4 | - | 120 | 31,8 | 68,2 | - | - | Mn3(PO4)2 · 3 H2O | Plättchen |
| 3 | Co | Mn3O4 | - | - | 70 | 37,3 | 62,7 | - | - | Mn3(PO4)2 · 3 H2O | Plättchen |
| 4 | Fe | Fe3O4 | NiSO4 | - | 100 | 39,2 | --- | 60,8 | - | Vivianit-Typ | Plättchen+Sphärisch |
| 5 | Co | Fe3O4 | - | - | 70 | 25,7 | 74,3 | - | - | Vivianit-Typ | Plättchen |
| 6 | Co | Co3O4 | - | - | 80 | 100,0 | --- | - | - | Vivianit-Typ | Plättchen |
| 7 | Fe | Fe3O4 | - | - | 80 | 100,0 | --- | - | - | Vivianit-Typ | Plättchen |
| 8 | Mn | Mn3O4 | - | - | 80 | 100,0 | --- | - | - | Mn3(PO4)2 · 3 H2O | Plättchen |
| 9 | Fe | Co3O4 | - | - | 80 | 11,2 | 88,8 | - | - | Vivianit-Typ | Plättchen |
| 10 | Fe | Mn3O4 | CoSO4 | - | 80 | 19,4 | 58,2 | 22,4 | - | Mn3(PO4)2 · 3 H2O | Plättchen |
| 11 | Fe | Mn3O4 | MgOAc2 | | 80 | 25,2 | 72,9 | 1,8 | - | Mn3(PO4)2 · 3 H2O | Plättchen |
| 12 | Fe | Co | Mn3O4 | - | 80 | 14,6 | 12,4 | 73,0 | - | Mn3(PO4)2 · 3 H2O | n.b. |
| 13 | Fe | Co | Mn3O4 | MgOAc2 | 80 | 13,7 | 12,4 | 73,0 | 1,0 | Mn3(PO4)2 · 3 H2O | n.b. |
| 14a | Fe | Mn3O4 | Al2(SO4)3 | - | 80 | 24,6 | 72,7 | 2,7 | - | Mn3(PO4)2 · 3 H2O | n.b. |
| 15 | Fe | Mn3O4 | CuCO3· Cu(OH)2 | - | 80 | 24,3 | 70,8 | 5,0 | - | Mn3(PO4)2 · 3 H2O | n.b. |
| 16a | Fe | Mn3O4 | LaCl3 | - | 80 | 23,8 | 68,1 | 8,1 | - | Mn3(PO4)2 · 3 H2O | n.b. |
| 17a | Fe | Mn3O4 | EuCl3 | - | 80 | 23,6 | 69,5 | 6,9 | - | Mn3(PO4)2 · 3 H2O | n.b. |
| 18a | Fe | Mn3O4 | SnCl2 | - | 80 | 24,0 | 70,2 | 5,8 | - | Mn3(PO4)2 · 3 H2O | n.b. |
| 19a | Fe | Mn3O4 | ZrOCl2 | - | 80 | 24,2 | 70,6 | 5,2 | - | Mn3(PO4)2 · 3 H2O | n.b. |
| 20 | Fe | Mn3O4 | CaCl2 | - | 80 | 25,1 | 73,0 | 1,9 | - | Mn3(PO4)2 · 3 H2O | n.b. |

| | | | | | | | | | | | |
|---|---|---|---|---|---|---|---|---|---|---|---|
| - T* = Trocknungstemperatur; "vac" = Vakuum; ^{a} = nicht erfindungsgemäß - M1, M2, M3 und M4 unter "Analytische Ergebnisse" = Gew.-% des eingebrachten Metalls, bezogen auf die Gesamtmenge der eingebrachten Metalle (--- = bei gleichen Metallen Anteil des Metalls bereits in vorhergehender Spalte angegeben) | | | | | | | | | | | |

## Patentansprüche

1. Nährstoffzusammensetzung für biologische Systeme, wie Menschen, Tiere, Pflanzen und Mikroorganismen, welche wenigstens ein monometallisches oder gemischtmetallisches Phosphat vom Typ (M1 M2 M3 ... M_{X})₃(PO₄)₂ · a H₂O mit 0 ≤ a ≤ 9 enthält, wobei (M1, M2, M3 ... Mx) das eine Metall des monometallischen oder die mehreren Metalle des gemischtmetallischen Phosphats repräsentieren und unter Na, K, Mg, Ca, Cr, Mo, W, Mn, Fe, Co, Ni, Cu, Zn und B ausgewählt sind mit der Maßgabe, dass wenigstens eines der Metalle in dem Phosphat unter Mn, Fe, Co und Ni ausgewählt ist, wobei das wenigstens eine Phosphat herstellbar oder hergestellt ist, indem man
a) eine wässrige Lösung (I) herstellt, welche wenigstens eines oder mehrere der Metalle Mn, Fe, Co und/oder Ni als zweiwertige Kationen enthält, indem man oxidische Metall(II)-, Metall(III)- und/oder Metall(IV)-Verbindungen oder deren Gemische oder Verbindungen mit gemischten Oxidationsstufen, ausgewählt unter Hydroxiden, Oxiden, Oxidhydroxiden, Oxidhydraten, Carbonaten und Hydroxidcarbonaten, von wenigstens einem der Metalle Mn, Fe, Co und/oder Ni zusammen mit den elementaren Formen oder Legierungen von wenigstens einem der Metalle Mn, Fe, Co und/oder Ni in ein Phosphorsäure enthaltendes wässriges Medium einbringt und die oxidischen Metallverbindungen mit den elementaren Formen oder Legierungen der Metalle (in einer Redoxreaktion) zu den zweiwertigen Metallionen umsetzt,
b) gegebenenfalls enthaltene Feststoffe von der phosphorsauren wässrigen Lösung (I) abtrennt,
c) wenn das Phosphat ein gemischtmetallisches Phosphat ist und zusätzlich zu den in Stufe a) in die Lösung eingebrachten Metallen weitere unter (M1, M2, M3 ... Mx) ausgewählte Metalle enthält, der wässrigen Lösung (I) weiterhin wenigstens eine Verbindung von wenigstens einem der Metalle (M1, M2, M3 ... Mx) in der Form einer wässrigen Lösung oder als Feststoff in der Form eines Salzes zugibt, wobei die wenigstens eine Verbindung vorzugsweise unter Hydroxiden, Oxiden, Oxidhydroxiden, Oxidhydraten, Carbonaten, Hydroxidcarbonaten, Carboxylaten, Sulfaten, Chloriden oder Nitraten der Metalle ausgewählt ist,
d) eine aus einer wässrigen Phosphorsäurelösung durch Neutralisation mit einer wässrigen Alkalihydroxidlösung hergestellte oder eine aus einer wässrigen Lösung eines oder mehrerer Alkaliphosphate hergestellte Vorlagelösung (II) mit einem pH-Wert von 5 bis 8 bereitstellt,
e) die wässrige Lösung (I) zu der Vorlagelösung (II) zudosiert und gleichzeitig eine basische wässrige Alkalihydroxidlösung so zudosiert, dass der pH-Wert des erhaltenen Reaktionsgemisches im Bereich von 5 bis 8, vorzugsweise 6 bis 7, gehalten wird, wobei das Phosphat vom Typ (M1 M2 M3...Mx)₃(PO₄)₂ · a H₂O ausgefällt wird und
f) das ausgefällte Phosphat von der Reaktionslösung abtrennt,
wobei das in Verfahrensschritt f) ausgefällte Phosphat eine plättchenförmige Morphologie der Primärkristallite aufweist und wobei die Plättchendicke der Primärkristallite in dem Bereich von 30 bis 50 nm liegt.

2. Nährstoffzusammensetzung nach Anspruch 1, **dadurch gekennzeichnet, dass** man das ausgefällte und von der Reaktionslösung abgetrennte Phosphat trocknet, vorzugsweise bis zu einer Hydratstufe (M1 M2 M3 ... M_{X})₃(PO₄)₂ · a H₂O mit 0 ≤ a ≤ 8, besonders bevorzugt bis zu einer Hydratstufe (M1 M2 M3...Mx)₃(PO₄)₂ · a H₂O mit 0 ≤ a ≤ 3.

3. Nährstoffzusammensetzung nach einem der Ansprüche 1 oder 2, **dadurch gekennzeichnet, dass** das Phosphat ein gemischtmetallisches Phosphat ist, welches wenigstens 2 verschiedene Metalle (M1 M2 M3...Mx) enthält, wobei das Phosphat vorzugsweise nicht mehr als 10 verschiedene Metalle (M1 M2 M3...Mx) enthält.

4. Nährstoffzusammensetzung nach einem der vorangegangenen Ansprüche, **dadurch gekennzeichnet, dass** man die Ausfällung des Phosphats vom Typ (M1 M2 M3...Mx) ₃(PO₄)₂ · a H₂O in Stufe e) bei einer Temperatur im Bereich von 5 bis 105°C, vorzugsweise im Bereich von 10 bis 40°C durchführt.

5. Nährstoffzusammensetzung nach einem der vorangegangenen Ansprüche, **dadurch gekennzeichnet, dass** die Vorlagelösung (II) die Phosphationen, berechnet als P₂O₅, in einer Konzentration im Bereich von 0,35 bis 1,85 mol/L enthält.

6. Nährstoffzusammensetzung nach einem der vorangegangenen Ansprüche, **dadurch gekennzeichnet, dass** das wenigstens eine monometallische oder gemischtmetallische Phosphat Mangan (Mn) enthält und im Pulverröntgenbeugungsdiagramm Peaks bei 10,96 ± 0,05, 12,78 ± 0,17, 14,96 ± 0,13, 17,34 ± 0,15, 18,98 ± 0,18, 21,75 ± 0,21, 22,07 ± 0,11, 22,97 ± 0,10, 25,93 ± 0,25, 26,95 ± 0,30, 27,56 ± 0,10, 29,19 ± 0,12, 29,84 ± 0,21, 30,27 ± 0,12, 34,86 ± 0,21, 35,00 ± 0,20, 35,33 ± 0,30, 35,58 ± 0,10, 35,73 ± 0,12, 42,79 ± 0,45, 43,37 ± 0,45, 44,70 ± 0,15 und 44,93 ± 0,20 Grad Zwei-Theta, basierend auf CuKα-Strahlung, aufweist.

7. Nährstoffzusammensetzung nach einem der vorangegangenen Ansprüche, **dadurch gekennzeichnet, dass** das wenigstens eine monometallische oder gemischtmetallische Phosphat Mangan (Mn) enthält und eine orthorhombische Elementarzelle mit Gitterparametern von 13,2 ± 0,2, 8,6 ± 0,2 und 8,1 ± 0,2 Angström aufweist.

8. Nährstoffzusammensetzung nach einem der vorangegangenen Ansprüche, **dadurch gekennzeichnet, dass** das Phosphorsäure enthaltende wässrige Medium für die Herstellung der wässrigen Lösung (I) die Phosphorsäure in einem molaren Überschuss gegenüber der Summe aus den molaren Mengen der in die Lösung einzubringenden Metall-Kationen der oxidischen Metall-Verbindungen und den in elementarer Form oder als Legierung einzubringenden Metallen enthält.

9. Nährstoffzusammensetzung nach einem der vorangegangenen Ansprüche, **dadurch gekennzeichnet, dass** man die Umsetzung der oxidischen Metallverbindungen mit den elementaren Formen oder Legierungen der Metalle in Stufe a) bei einer Temperatur im Bereich von 5°C bis 105°C, vorzugsweise im Bereich von 10°C bis 75°C, besonders bevorzugt im Bereich von 20°C bis 50°C, und/oder unter intensivem Durchmischen und/oder für einen Zeitraum von 1 min bis 240 min, vorzugsweise von 5 min bis 120 min, besonders bevorzugt von 30 min bis 90 min durchführt.

10. Nährstoffzusammensetzung nach einem der vorangegangenen Ansprüche, **dadurch gekennzeichnet, dass** die Konzentration der Phosphorsäure in der wässrigen Lösung (I) 5% bis 85%, vorzugsweise 10% bis 40%, besonders bevorzugt 15% bis 30%, ganz besonders bevorzugt 20% bis 25%, bezogen auf das Gewicht der wässrigen Lösung (I), beträgt.

11. Verwendung einer Nährstoffzusammensetzung nach einem der vorangegangenen Ansprüche zur Nährstoffzuführung in Getreide, Hackfrüchte, Obst, Gemüse, Zierpflanzen, Rasen, Grünflächen und Energiepflanzen, zur Nährstoffergänzung von Lebensmitteln oder Futtermitteln für landwirtschaftliche Nutztiere, Sport- oder Heimtiere oder als Nährstoff in der Biopolymerproduktion, bei der mikrobiologischen Nahrungsmittelproduktion, in Nähr- und Kulturmedien für Zellen und Mikroorganismen, in der Fermentation, bei der mikrobiologischen Sanierung, in der Abfallbehandlung sowie bei der mikrobiologischen Herstellung von Produkten im Bereich des Gesundheitswesens.

12. Verfahren zur Herstellung einer Nährstoffzusammensetzung für biologische Systeme, wie Menschen, Tiere, Pflanzen und Mikroorganismen, wobei die Nährstoffzusammensetzung die Merkmale und das Verfahren die Verfahrensstufen nach einem der Ansprüche 1 bis 10 aufweist.

## Claims

1. Nutrient composition for biological systems, such as humans, animals, plants and microorganisms, which comprises at least one monometallic or mixed metallic phosphate of the type (M1 M2 M3 ... M_{X})₃(PO₄)₂ · a H₂O, where 0 ≤ a ≤ 9, wherein (M1, M2, M3 ... Mx) represent the one metal of the monometallic or the several metals of the mixed metallic phosphate and are selected from Na, K, Mg, Ca, Cr, Mo, W, Mn, Fe, Co, Ni, Cu, Zn and B, with the proviso that at least one of the metals in the phosphate is selected from Mn, Fe, Co and Ni, wherein the at least one phosphate can be prepared or is prepared by
a) preparing an aqueous solution (I) which comprises at least one or more of the metals Mn, Fe, Co and/or Ni as divalent cations by introducing oxidic metal(II), metal(III) and/or metal(IV) compounds or mixtures or compounds thereof having mixed oxidation states, selected from hydroxides, oxides, oxide hydroxides, oxide hydrates, carbonates and hydroxide carbonates, of at least one of the metals Mn, Fe, Co and/or Ni together with the elemental forms or alloys of at least one of the metals Mn, Fe, Co and/or Ni into an aqueous medium comprising phosphoric acid and reacting the oxidic metal compounds with the elemental forms or alloys of the metals (in a redox reaction) to give the divalent metal ions,
b) separating off any solids present from the phosphoric acid aqueous solution (I),
c) if the phosphate is a mixed metallic phosphate and, in addition to the metals introduced into the solution in stage a), comprises further metals selected from (M1, M2, M3 ... Mx), furthermore adding to the aqueous solution (I) at least one compound of at least one of the metals (M1, M2, M3 ... Mx) in the form of an aqueous solution or as a solid in the form of a salt, the at least one compound preferably being selected from hydroxides, oxides, oxide hydroxides, oxide hydrates, carbonates, hydroxide carbonates, carboxylates, sulphates, chlorides or nitrates of the metals,
d) providing an initial charge solution (II) having a pH of from 5 to 8 prepared from an aqueous phosphoric acid solution by neutralization with an aqueous alkali metal hydroxide solution or prepared from an aqueous solution of one or more alkali metal phosphates,
e) metering the aqueous solution (I) into the initial charge solution (II) and simultaneously metering in a basic aqueous alkali metal hydroxide solution such that the pH of the reaction mixture obtained is kept in the range of from 5 to 8, preferably 6 to 7, the phosphate of the type (M1 M2 M3...Mₓ)₃(PO₄)₂ · a H₂O being precipitated, and
f) separating off from the reaction solution the phosphate which has precipitated,
wherein the phosphate which has precipitated in method step f) has a platelet-shaped morphology of the primary crystallites, and wherein the platelet thickness of the primary crystallites is in the range of from 30 to 50 nm.

2. Nutrient composition according to claim 1, **characterized in that** the phosphate which has been precipitated and separated off from the reaction solution is dried, preferably down to a hydrate level (M1 M2 M3 ... M_{X})₃(PO₄)₂ · a H₂O, where 0 ≤ a ≤ 8, particularly preferably down to a hydrate level (M1 M2 M3 ... M_{X})₃(PO₄)₂ · a H₂O, where 0 ≤ a ≤ 3.

3. Nutrient composition according to one of claims 1 or 2, **characterized in that** the phosphate is a mixed metallic phosphate which comprises at least 2 different metals (M1 M2 M3...Mx), wherein the phosphate preferably comprises not more than 10 different metals (M1 M2 M3...Mx).

4. Nutrient composition according to one of the preceding claims, **characterized in that** the precipitation of the phosphate of the type (M1 M2 M3...Mx)₃(PO₄)₂ · a H₂O in stage e) is carried out at a temperature in the range of from 5 to 105 ºC, preferably in the range of from 10 to 40 ºC.

5. Nutrient composition according to one of the preceding claims, **characterized in that** the initial charge solution (II) comprises the phosphate ions, calculated as P₂O₅, in a concentration in the range of from 0.35 to 1.85 mol/l.

6. Nutrient composition according to one of the preceding claims, **characterized in that** the at least one monometallic or mixed metallic phosphate comprises manganese (Mn) and, in the powder x-ray diffraction diagram, has peaks at 10.96 ± 0.05, 12.78 ± 0.17, 14.96 ± 0.13, 17.34 ± 0.15, 18.98 ± 0.18, 21.75 ± 0.21, 22.07 ± 0.11, 22.97 ± 0.10, 25.93 ± 0.25, 26.95 ± 0.30, 27.56 ± 0.10, 29.19 ± 0.12, 29.84 ± 0.21, 30.27 ± 0.12, 34.86 ± 0.21, 35.00 ± 0.20, 35.33 ± 0.30, 35.58 ± 0.10, 35.73 ± 0.12, 42.79 ± 0.45, 43.37 ± 0.45, 44.70 ± 0.15 and 44.93 ± 0.20 degree two-theta, based on CuKα radiation.

7. Nutrient composition according to one of the preceding claims, **characterized in that** the at least one monometallic or mixed metallic phosphate comprises manganese (Mn) and has an orthorhombic unit cell having lattice parameters of 13,2 ± 0.2, 8.6 ± 0.2 and 8.1 ± 0.2 Angstrom.

8. Nutrient composition according to one of the preceding claims, **characterized in that** the aqueous medium comprising phosphoric acid for the preparation of the aqueous solution (I) comprises the phosphoric acid in a molar excess with respect to the sum of the molar amounts of the metal cations, which are to be introduced into the solution, of the oxidic metal compounds and the metals to be introduced in elemental form or as an alloy.

9. Nutrient composition according to one of the preceding claims, **characterized in that** the reaction of the oxidic metal compounds with the elemental forms or alloys of the metals in stage a) is carried out at a temperature in the range of from 5 ºC to 105 ºC, preferably in the range of from 10 ºC to 75 ºC, particularly preferably in the range of from 20 ºC to 50 ºC, and/or with intensive thorough mixing and/or for a period of time of from 1 min to 240 min, preferably from 5 min to 120 min, particularly preferably from 30 min to 90 min.

10. Nutrient composition according to one of the preceding claims, **characterized in that** the concentration of the phosphoric acid in the aqueous solution (I) is 5 % to 85 %, preferably 10 % to 40 %, particularly preferably 15 % to 30 %, very particularly preferably 20 % to 25 %, based on the weight of the aqueous solution (I).

11. Use of a nutrient composition of one of the preceding claims for supplying nutrients in cereals, root crops, fruit, vegetables, ornamental plants, lawns, green areas, energy plants, for nutrient supplementation of foodstuffs and feedstuffs for agricultural stock animals, sport or domestic animals, or as nutrient in biopolymer production, in microbiological foodstuffs production, in nutrient and culture media for cells and microorganisms, in fermentation, in microbiological cleaning, in waste treatment and in the microbiological preparation of products in the health sector.

12. Process for the preparation of a nutrient composition for biological systems, such as humans, animals, plants and microorganisms, wherein the nutrient composition has the features and the process has the process stages according to one of claims 1 to 10.

## Revendications

1. Composition de substances nutritives pour systèmes biologiques, tels que les humains, les animaux, les plantes et les microorganismes, qui contient au moins un phosphate monométallique ou métallique mixte de type (M1 M2 M3... Mx)₃(PO₄)₂ . a H₂O, avec 0 ≤ a ≤ 9, où (M1 M2 M3... Mx) représentent le métal du phosphate monométallique ou les plusieurs métaux du phosphate métallique mixte et sont sélectionnés parmi Na, K, Mg, Ca, Cr, Mo, W, Mn, Fe, Co, Ni, Cu, Zn et B à la condition qu'au moins un des métaux du phosphate soit sélectionné parmi Mn, Fe, Co et Ni, où le phosphate, au moins au nombre de un, peut être préparé ou est préparé en ce que
a) on prépare une solution aqueuse (I) qui contient au moins un ou plusieurs des métaux Mn, Fe, Co et/ou Ni en tant que cations divalents en ce que l'on place des composés d'oxyde de métal(II), de métal(III) et/ou de métal(IV) ou leurs mélanges ou composés avec des étapes d'oxydation mixtes, sélectionnés parmi des hydroxydes, des oxydes, des oxyhydroxydes, des oxyhydrates, des carbonates et des hydroxycarbonates, d'au moins un des métaux Mn, Fe, Co et/ou Ni avec les formes élémentaires ou des alliages d'au moins un des métaux Mn, Fe, Co et/ou Ni, dans un milieux aqueux contenant de l'acide phosphorique, et en ce que les composés d'oxydes métalliques sont mis à réagir avec les formes élémentaires ou les alliages des métaux (dans une réaction d'oxydoréduction) pour donnner des ions métalliques divalents,
b) on sépare les solides éventuellement contenus de la solution aqueuse d'acide phosphorique (I),
c) lorsque le phosphate est un phosphate métallique mixte et contient en plus des métaux incorporés dans la solution à l'étape a) d'autres métaux sélectionnés parmi (M1 M2 M3... Mx), on ajoute de plus à la solution aqueuse (I) au moins un composé d'au moins un des métaux (M1 M2 M3... Mx) sous la forme d'une solution aqueuse ou en tant que solide sous la forme d'un sel, où le composé, au moins au nombre de un, est de préférence sélectionné parmi des hydroxydes, des oxydes, des oxyhydroxydes, des oxyhydrates, des carbonates, des hydroxycarbonates, des carboxylates, des sulfates, des chlorures ou des nitrates des métaux,
d) on prépare une solution modèle (II) obtenue à partir d'une solution aqueuse d'acide phosphorique par neutralisation avec une solution aqueuse d'hydroxyde alcalin ou obtenue à partir d'une solution aqueuse d'un ou de plusieurs phosphates alcalins présentant une valeur de pH comprise entre 5 et 8,
e) on réalise une addition dosée de la solution aqueuse (I) à la solution modèle (II) et parallèlement une addition dosée d'une solution aqueuse basique d'hydroxyde alcalin de façon à ce que la valeur de pH du mélange réactionnel obtenu soit maintenue dans la plage de 5 à 8, de préférence de 6 à 7, suite à quoi le phosphate de type (M1 M2 M3... Mx)₃(PO₄)₂ . a H₂O précipite et,
f) le phosphate précipité est séparé de la solution réactionnelle,
le phosphate ayant précipité à l'étape f) présentant une morphologie lamellaire des cristallites primaires, l'épaisseur des lamelles des cristallites primaires étant comprise dans la plage de 30 à 50 nm.

2. Composition de substances nutritives selon la revendication 1, **caractérisée en ce que** l'on sèche le phosphate précipité et séparé de la solution réactionnelle, de préférence jusqu'à obtenir un degré d'hydratation (M1 M2 M3... Mx)₃(PO₄)₂ . a H₂O avec 0 ≤ a ≤ 8, de façon particulièrement préférée jusqu'à obtenir un degré d'hydratation (M1 M2 M3... Mx)₃(PO₄)₂ . a H₂O avec 0 ≤ a ≤ 3.

3. Composition de substances nutritives selon l'une des revendications 1 ou 2, **caractérisée en ce que** le phosphate est un phosphate métallique mixte qui contient au moins 2 métaux différents (M1 M2 M3... Mx), où le phosphate ne contient pas plus de 10 métaux différents (M1 M2 M3... Mx).

4. Composition de substances nutritives selon l'une des revendications précédentes, **caractérisée en ce que** l'on réalise la précipitation du phosphate du type (M1 M2 M3... Mx)₃(PO₄)₂ . a H₂O à l'étape e) à une température dans la plage de 5 à 105 °C, de préférence dans la plage de 10 à 40 °C.

5. Composition de substances nutritives selon l'une des revendications précédentes, **caractérisée en ce que** la solution modèle (II) contient les ions phosphate, calculés en tant que P₂O₅, selon une concentration dans la plage de 0,35 à 1,85 mol/l.

6. Composition de substances nutritives selon l'une des revendications précédentes, **caractérisée en ce que** le phosphate monométallique ou métallique mixte, au moins au nombre de un, contient du manganèse (Mn) et présente dans le diagramme de diffraction des rayons X sur poudre des pics à 10,96 ± 0,05, 12,78 ± 0,17, 14,96 ± 0,13, 17,34 ± 0,15, 18,98 ± 0,18, 21,75 ± 0,21, 22,07 ± 0,11, 22,97 ± 0,10, 25,93 ± 0,25, 26,95 ± 0,30, 27,56 ± 0,10, 29,19 ± 0,12, 29,84 ± 0,21, 30,27 ± 0,12, 34,86 ± 0,21, 35,00 ± 0,20, 35,33 ± 0,30, 35,58 ± 0,10, 35,73 ± 0,12, 42,79 ± 0,45, 43,37 ± 0,45, 44,70 ± 0,15 et 44,93 ± 0,20 degrés 2θ, sur la base d'un rayonnement CuKα.

7. Composition de substances nutritives selon l'une des revendications précédentes, **caractérisée en ce que** le phosphate monométallique ou métallique mixte, au moins au nombre de un, contient du manganèse (Mn) et présente une maille élémentaire orthorhombique avec des paramètres réticulaires de 13,2 ± 0,2, 8,6 ± 0,2 et 8,1 ± 0,2 angströms.

8. Composition de substances nutritives selon l'une des revendications précédentes, **caractérisée en ce que** le milieu aqueux contenant de l'acide phosphorique contient pour la préparation de la solution aqueuse (I) l'acide phosphorique en excès molaire par rapport à la somme des quantités molaires des cations métalliques des composés métalliques d'oxyde à introduire dans la solution et des métaux à introduire sous une forme élémentaire ou en tant qu'alliage.

9. Composition de substances nutritives selon l'une des revendications précédentes, **caractérisée en ce que** l'on réalise la réaction des composés métalliques d'oxyde avec les formes élémentaires ou les alliages des métaux à l'étape a) à une température dans la plage de 5 °C à 105 °C, de préférence dans la plage de 10 °C à 75 °C, de façon particulièrement préférée de 20 °C à 50 °C, et/ou sous mélange intense et/ou pendant une durée de 1 min à 240 min, de préférence de 5 min à 120 min, de façon particulièrement préférée de 30 min à 90 min.

10. Composition de substances nutritives selon l'une des revendications précédentes, **caractérisée en ce que** la concentration de l'acide phosphorique dans la solution aqueuse (I) est de 5 % à 85 %, de préférence de 10 % à 40 %, de façon particulièrement préférée de 15 % à 30 %, de façon tout particulièrement préférée de 20 % à 25 %, sur la base du poids de la solution aqueuse (I).

11. Utilisation d'une composition de substances nutritives selon l'une des revendications précédentes pour l'apport de substances nutritives à des céréales, des plantes sarclées, des fruits, des légumes, des plantes ornementales, du gazon, des espaces verts et des cultures énergétiques, pour compléter l'apport en substances nutritives des aliments ou des fourrages pour les animaux d'élevage agricole, les animaux de sport ou domestiques, ou en tant que substance nutritive dans la production de biopolymères, dans la production d'aliments microbiologiques, dans les substrats nutritifs et des milieux de culture de cellules et microorganismes, dans la fermentation, dans l'assainissement microbiologique, dans le traitement des déchets ainsi que dans la production microbiologique de produits du secteur de la santé.

12. Procédé de préparation d'une composition de substances nutritives pour systèmes biologiques, tels que les humains, les animaux, les plantes et les microorganismes, où la composition de substances nutritives présente les caractéristiques et le procédé présente les étapes de procédé selon l'une des revendications 1 à 10.
